(19) Europäisches Patentamt
European Patent Office
Office européen des brevets

(11) Publication number: 0 277 004 A1

# (12) EUROPEAN PATENT APPLICATION

(21) Application number: 88300699.1

(22) Date of filing: 27.01.88

(51) Int. Cl.[4]: C 08 F 4/64
C 08 F 4/76, C 08 F 10/00,
C 07 F 17/00

(30) Priority: 30.01.87 US 8800 22.12.87 US 133480

(43) Date of publication of application:
03.08.88 Bulletin 88/31

(84) Designated Contracting States:
AT BE DE ES FR GB IT LU NL SE

(71) Applicant: EXXON CHEMICAL PATENTS INC.
1900 East Linden Avenue
Linden New Jersey 07036 (US)

(72) Inventor: Turner, Howard William
303 Elder Glen
Webster Texas 77598 (US)

(74) Representative: Dew, Melvyn John et al
Exxon Chemical Limited Exxon Chemical Technology
Centre P.O. Box 1
Abingdon Oxfordshire, OX13 6BB (GB)

## (54) Catalysts, method of preparing these catalysts and method of using said catalysts.

(57) A catalyst is prepared by combining a first compound consisting of a bis(cyclopentadienyl)metal compound having one of the following general formulae: 1. $(A\text{-}Cp)MX_1X_2$

2. $(A\text{-}Cp)M\overline{X'_1X'_2}$

3. $(A\text{-}Cp)ML$

4. $(Cp^*)(Cp\overline{R)M}X_1$

Wherein:

M is a metal selected from the Group consisting of titanium, zirconium and hafnium;

(A-Cp) is either (Cp)(Cp*) or Cp-A'-Cp* and Cp and Cp* are the same or different substituted or unsubstituted cyclopentadienyl radicals;

A' is a covalent bridging group;

L is an olefin, diolefin or aryne ligand;

$X_1$ and $X_2$ are, independently, selected from the group consisting of hydride radicals, hydrocarbyl radicals, substituted-hydrocarbyl radicals, organometalloid radicals and the like;

$X'_1$ and $X'_2$ are joined and bound to the metal atom to form a metallacycle, in which the metal atom, $X'_1$ and $X'_2$ form a hydrocarbocyclic ring containing from about 3 to about 20 carbon atoms; and

R is a substituent on one of the cyclopentadienyl radicals which is also bound to the metal atom.

With a second compound which is an ion exchange compound comprising a cation which will irreversible react with a ligand on said first component and an anion which is a single coordination complex comprising a plurality of lipophilic radicals covalently coordinated to and shielding a central charge-bearing metal or metalloid atom, which anion is bulky and stable to reactions involving the cation of the second component. Upon combination of the first and second components, the cation of the second component reacts with one of the ligands of the first component, thereby generating an ion pair consisting of a Group IV-B metal cation with a formal coordination number of 3 and a valence of +4 and the aforementioned anion, which anion is compatible with and noncoordinating towards the metal cation formed from the first component. Suitable second components may be represented by the following general formula:

$[(L'\text{-}H)^+]_d[(M')^{m+}Q_1Q_2...Q_n]^{d-}$

Wherein:

L' is a neutral Lewis base;

H is a hydrogen atom;

[L'-H] is a Bronsted acid;

M' is a metal or metalloid selected from the Groups subtended by Groups V-B to V-A of the Periodic Table of the Elements; ie., Groups V-B, VI-B, VII-B, VIII, I-B, II-B, III-A, IV-A and V-A;

EP 0 277 004 A1

$Q_1$ to $Q_n$ are selected, independently, from the Group consisting of hydride radicals, dialkylamido radicals, alkoxide and aryloxide radicals, hydrocarbyl and substituted-hydrocarbyl radicals and organometalloid radicals and any one, but not more than one, of $Q_1$ to $Q_n$ may be a halide radical - the remaining $Q_1$ to $Q_n$ being, independently, selected from the foregoing radicals;

m is an integer from 1 to 7;

n is an integer from 2 to 8; and

$n - m = d$.

Many of the catalysts thus formed are stable and isolable and may be recovered and stored. The catalysts may be preformed and then used to polymerize olefins, diolefins and/or acetylenically unsaturated compounds either alone or in combination with each other or with other monomers or the catalysts may be formed in situ during polymerization by adding the separate components to the polymerization reaction. The catalyst will be formed when the two components are combined in a suitable solvent or diluent at a temperature within the range from about -100°C to about 300°C. The catalysts thus prepared afford better control of polymer molecular weight and are not subject to equilibrium reversal. The catalysts thus produced are also less pyrophoric than the more conventional Ziegler-Natta olefin polymerization catalysts. Certain of the catalysts also yield homopolymers of α-olefins having relatively high molecular weights. Certain of these catalysts also yield copolymers containing significantly more comonomer, many of which copolymers will be elastomeric.

**Description**

CATALYSTS, METHOD OF PREPARING THESE CATALYSTS AND METHOD OF USING SAID CATALYSTS

This a Continuation-In-Part of U. S. Patent Application Serial No. 008,800, filed January 30, 1987.

BACKGROUND OF THE INVENTION

This invention relates to compositions of matter which are useful as catalysts, to a method for preparing these catalysts, to a method of using these catalysts and to polymeric products produced with these catalysts. More particularly, this invention relates to catalyst compositions, to a method of preparing these catalyst compositions, to a method for polymerizing olefins, diolefins and/or acetylenically unsaturated monomers wherein these catalysts are used and to homopolymer and copolymer products produced with these catalysts.

The use of soluble Ziegler-Natta type catalysts in the polymerization of olefins is, of course, well known in the prior art. In general, these soluble systems comprise a Group IV-B metal compound and a metal alkyl cocatalyst, particularly an aluminum alkyl cocatalyst. A subgenus of these catalysts is that subgenus comprising a bis(cyclopentadienyl) compound of the Group IV-B metals, particularly titanium, in combination with aluminum alkyl cocatalysts. While speculation remains concerning the actual structure of the active catalyst species in this subgenus of soluble Ziegler-Natta type olefin polymerization catalysts, it would appear generally accepted that the active catalyst species is a cation or a decomposition product thereof which will alkylate an olefin in the presence of a labile stabilizing anion. This theory may have first been advocated by Breslow and Newburg, and Long and Breslow, as indicated in their respective articles appearing in J. Am. Chem. Soc., 1959, Vol. 81, pp. 81-86, and J. Am. Chem. Soc., 1960, Vol. 82, pp. 1953-1957. As indicated in these articles, various studies suggested that the active catalyst species is a titanium-alkyl complex or a species derived therefrom when a titanium compound; viz., bis(cyclopentadienyl)titanium dihalide, and an aluminum alkyl are used as a catalyst or catalyst precursor. The presence of ions, all being in equilibrium, when a titanium compound is used was also suggested by Dyachkovskii, Vysokomol. Soyed., 1965, Vol. 7, pp. 114-115 and by Dyachkovskii, Shilova and Shilov, J. Polym.Sci., Part C, 1967, pp. 2333-2339. That the active catalyst species is a cation complex when a titanium compound is used, was further suggested by Eisch et al., J. Am. Chem. Soc., 1985, Vol. 107, pp. 7219-7221.

While the foregoing articles teach or suggest that the active catalyst species is an ion pair and, particularly an ion pair wherein the Group IV-B metal component is present as a cation or a decomposition product thereof, and while these references teach or suggest coordination chemistry to form such active catalyst species, all of the articles teach the use of a cocatalyst comprising a Lewis acid either to form or to stabilize the active ionic catalyst species. The active catalysts is, apparently, formed through a Lewis acid-Lewis base reaction of two neutral components (the metal-locene and the aluminum alkyl), leading to an equilibrium between a neutral, apparently inactive, adduct and an ion pair, presumably the active catalyst. As a result of this equilibrium, there is a competition for the anion which must be present to stabilize the active cation catalyst species. This equilibrium is, of course, reversible and such reversal will deactivate the catalyst. Moreover, the catalyst systems heretofore contemplated are subject to poisoning by the presence of basic impurities in the system. Further, many, if not all, of the Lewis acids heretofore contemplated for use in soluble Ziegler-Natta type catalyst systems are chain transfer agents and, as a result, prevent effective control of the product polymer molecular weight and molecular weight distribution. Still further, the catalyst systems heretofore proposed do not generally facilitate incorporation of a significant amount of a plurality of different monomers or random distribution of such monomers when used in copolymerization processes, particularly $\alpha$-olefin copolymerization processes. Still even further, most, if not all, of the metal alkyl cocatalysts heretofore contemplated are highly pyrophoric and, as a result, hazardous to use.

The aforementioned catalyst systems are not highly active, nor or they generally active when zirconium or hafnium is the Group IV-B metal used. Recently, however, it has been found that active Ziegler-Natta type catalysts can be formed when bis(cyclopentadienyl) compounds of the Group IV-B metals, including zirconium and hafnium, are used with alumoxanes. As is well known, these systems particularly those comprising zirconium, offer several distinct advantages, including vastly higher activities that the aforementioned bis(cyclopentadienyl)titanium catalysts and the production of polymers with narrower molecular weight distributions than those from conventional Ziegler-Natta catalysts. These recently developed catalyst systems still yield polymeric products having relatively low molecular weight, however. Moreover, these recently developed catalyst systems have not affected the amount of comonomer incorporated into a copolymer or the relative distribution of such monomer therein. Further, these systems remain subject to poisoning when basic impurities are present and require an undesirable excess of the alumoxane to function efficiently.

Bis(cyclopentadienyl)hafnium compounds used with alumoxane cocatalysts have offered few, if any, advantages when compared to analogous bis(cyclopentadienyl)titanium or -zirconium catalysts with respect to catalysts activity, polymer molecular weights, or extent or randomness of comonomer incorporation. This has been suggested by Giannetti, Nicoletti, and Mazzochi, J. Polym. Sci., Polym. Chem. 1985, Vol. 23, pp. 2117-2133, who claimed that the ethylene polymerization rates of bis(cyclopentadienyl)hafnium compounds were five to ten times slower than those of similar bis(cyclopentadienyl)zirconium compounds while there was little difference between the two catalysts in the molecular weight of the polyethylene formed from them. European Patent Application No. 200,351 A2 (1986) suggests that in the copolymerization of

ethylene and propylene there is little difference among bis(cyclopentadienyl)titanium, -zirconium, and -hafnium compounds either in polymer molecular weights and molecular weight distributions or in ability to incorporate propylene randomly. Recently, however, Ewen et al. disclosed in J. Am. Chem. Soc., 1987, Vol. 109, pp. 6544-6545, that chiral hafnium metallocene compounds used with an alumoxane cocatalyst gave isotactic polypropylene of higher molecular weight than that obtained from analogous chiral zirconium metallocenes.

In light of the several deficiencies of the coordination catalyst systems heretofore contemplated, the need for an improved catalyst system which: (1) permits better control of molecular weight and molecular weight distribution; (2) is not subject to activation equilibrium and (3) does not involve the use of an undesirable cocatalyst is believed readily apparent. The need for a catalyst system which will facilitate the production of higher molecular weight polymeric products and facilitate incorporation of a larger amount of comonomer into a copolymer and alter the relative distribution of such comonomers in such copolymers is also believed to be readily apparent.

## SUMMARY OF THE INVENTION

It has now been discovered that certain of the foregoing and other disadvantages of the prior art ionic olefin polymerization catalysts can be avoided, or at least reduced, with all of the ionic catalysts of the present invention and that all of the foregoing and other disadvantages of the prior art ionic olefin polymerization catalysts can be avoided, or at least reduced, with certain of the ionic catalysts of this invention and improved olefin, diolefin and/or acetylenically unsaturated monomer polymerization processes provided therewith. It is, therefore, an object of this invention to provide improved ionic catalyst systems which are useful in the polymerization of olefins, diolefins and/or acetylenically unsaturated monomers. It is another object of this invention to provide a method for preparing such improved catalysts. It is a further object of this invention to provide an improved polymerization process using such improved catalysts. It is still another object of this invention to provide such an improved catalyst which is not subject to ion equilibrium reversal. It is still a further object of this invention to provide such an improved catalyst which may permit better control of the product polymer molecular weight and molecular weight distribution. It is yet another object of this invention to provide such an improved catalyst which may be used with less risk of fire. It is yet a further object of this invention to provide certain improved catalysts, particularly certain hafnium containing catalysts, which will yield relatively high molecular weight polymers. It is even another object of this invention to provide certain improved catalysts, particularly certain hafnium containing catalysts, which will yield copolymers containing relatively large amounts of a plurality of comonomers, which comonomers are distributed in a manner at least approaching randomness. It is even a further object of this invention to provide polymeric products produced with these catalysts having relatively narrow molecular weight distributions and which are free of certain metal impurities. It is still even another object of this invention to provide certain polymeric products, prepared with certain of these catalysts, having relatively high molecular weights. It is still even a further object of this invention to provide certain copolymers, prepared with certain of these catalysts, containing relatively large amounts of a plurality of comonomers, which comonomers are distributed in a manner at least approaching randomness. The foregoing and still other objects and advantages of the present invention will become apparent from the description set forth hereinafter and the examples included herein.

In accordance with the present invention, the foregoing and other objects and advantages are accomplished with and by using a catalyst prepared by combining at least two components. The first of which components is a bis(cyclopentadienyl) derivative of a Group IV-B metal compound containing at least one ligand which will combine with the second component or at least a portion thereof such as a cation portion thereof. The second of which components is an ion-exchange compound comprising a cation which will irreversibly react with at least one ligand contained in said Group IV-B metal compound (first component) and an anion which is a single coordination complex comprising a plurality of lipophilic radicals covalently coordinated to and shielding a central formally charge-bearing metal or metalloid atom, which anion is bulky, labile and stable to any reaction involving the cation of the second component. The charge-bearing metal or metalloid may be any metal or metalloid capable of forming a coordination complex which is not hydrolyzed by aqueous solutions. Upon combination of the first and second components, the cation of the second component reacts with one of the ligands of the first component, thereby generating an ion pair consisting of a Group IV-B metal cation with a formal coordination number of 3 and a valence of +4 and the aforementioned anion, which anion is compatible with and noncoordinating towards the metal cation formed from the first component. The anion of the second compound must be capable of stabilizing the Group IV-B metal cation complex without interfering with the Group IV-B metal cation's or its decomposition product's ability to function as a catalyst and must be sufficiently labile to permit displacement by an olefin, diolefin or an acetylenically unsaturated monomer during polymerization. For example, Bochmann and Wilson have reported (J. Chem. Soc., Chem. Comm., 1986, pp. 1610-1611) that bis(cyclopentadienyl)titanium dimethyl reacts with tetrafluoroboric acid to form bis(cyclopentadienyl)titanium methyl tetrafluoroborate. The anion is, however, insufficiently labile to be displaced by ethylene.

## DETAILED DESCRIPTION OF THE INVENTION

As indicated supra, the present invention relates to catalysts, to a method for preparing such catalysts, to a method for using such catalysts and to polymeric products produced with such catalysts. The catalysts are particularly useful for polymerizing α-olefins, diolefins and acetylenically unsaturated monomers either alone

or in combination with other α-olefins, diolefins and/or other unsaturated monomers. The improved catalysts are prepared by combining at least one first compound which is a bis(cyclopentadienyl) derivative of a metal of Group IV-B of the Periodic Table of the Elements containing at least one ligand which will combine with the cation of the second compound which first compound is capable of forming a cation formally having a coordination number of 3 and a valence of +4 and at least one second compound which is a salt comprising a cation capable of donating a proton which will irreversibly combine with said at least one ligand (substituent) liberated by said Group IV-B metal compound and an anion which is a single coordination complex comprising a charge-bearing metal or metalloid core, which anion is both bulky and labile, compatible with and noncoordinating toward the Group IV-B metal cation formed from the first component, and capable of stabilizing the Group IV-B metal cation without interfering with said Group IV-B metal cation's or its decomposition product's ability to polymerize α-olefins, diolefins and/or acetylenically unsaturated monomers.

All reference to the Periodic Table of the Elements herein shall refer to the Periodic Table of the Elements, published and copyrighted by CRC Press, Inc., 1984. Also, any reference to a Group or Groups shall be to the Group or Groups as reflected in this Periodic Table of the Elements.

As used herein, the recitation "compatible noncoordinating anion" means an anion which either does not coordinate to said cation or which is only weakly coordinated to said cation thereby remaining sufficiently labile to be displaced by a neutral Lewis base. The recitation "compatible noncoordinating anion" specifically refers to an anion which when functioning as a stabilizing anion in the catalyst system of this invention does not transfer an anionic substituent or fragment thereof to said cation thereby forming a neutral four coordinate metallocene and a neutral metal or metalloid byproduct. Compatible anions are anions which are not degraded to neutrality when the initially formed complex decomposes. The recitation "metalloid, as used herein, includes non-metals such as boron, phosphorus and the like which exhibit semi-metallic characteristics.

The Group IV-B metal compounds; i.e., titanium, zirconium and hafnium compounds, useful as first compounds in the preparation of the improved catalyst of this invention are bis(cyclopentadienyl) derivatives of titanium, zirconium and hafnium. In general, useful titanium, zirconium and hafnium compounds may be represented by the following general formulae: 1. $(A\text{-}Cp)MX_1X_2$

2. $(A\text{-}Cp)M\overline{X'_1X'_2}$

3. $(A\text{-}Cp)M\overline{L}$

4. $(Cp^*)(Cp\overline{R)M}X_1$

Wherein:

(A-Cp) is either (Cp)(Cp*) or Cp-A′-Cp* and Cp and Cp* are the same or different substituted or unsubstituted cyclopentadienyl radicals wherein A′ is a covalent bridging group containing a Group IV-A element;

M is a metal selected from the Group consisting of titanium, zirconium and hafnium;

L is an olefin, diolefin or aryne ligand;

$X_1$ and $X_2$ are, independently, selected from the group consisting of hydride radicals, hydrocarbyl radicals having from 1 to about 20 carbon atoms, substituted-hydrocarbyl radicals, wherein one or more of the hydrogen atoms are replaced with a halogen atom, having from 1 to about 20 carbon atoms, organometallold radicals comprising a Group IV-A element wherein each of the hydrocarbyl substitutions contained in the organic portion of said organometalloid, independently, contain from 1 to about 20 carbon atoms and the like;

$X'_1$ and $X'_2$ are joined and bound to the metal atom to form a metallacycle, in which the metal atom, $X'_1$ and $X'_2$ form a hydrocarbocyclic ring containing from about 3 to about 20 carbon atoms; and

R is a substituent, preferably a hydrocarbyl substituent, on one of the cyclopentadienyl radicals which is also bound to the metal atom.

Each carbon atom in the cyclopentadienyl radical may be, independently, unsubstituted or substituted with the same or a different radical selected from the group consisting of hydrocarbyl radicals, substituted-hydrocarbyl radicals wherein one or more hydrogen atoms is replaced by a halogen atom, hydrocarbyl-substituted metalloid radicals wherein the metalloid is selected from the Group IV-A of the Periodic Table of the Elements, and halogen radicals. Suitable hydrocarbyl and substituted-hydrocarbyl radicals, which may be substituted for at least one hydrogen atom in the cyclopentadienyl radical, will contain from 1 to about 20 carbon atoms and include straight and branched alkyl radicals, cyclic hydrocarbon radicals, alkyl-substituted cyclic hydrocarbon radicals, aromatic radicals and alkyl-substituted aromatic radicals. Similarly, and when $X_1$ and/or $X_2$ is a hydrocarbyl or substituted-hydrocarbyl radical, each may, independently, contain from 1 to about 20 carbon atoms and be a straight or branched alkyl radical, a cyclic hydrocarbyl radical, an alkyl-substituted cyclohydrocarbyl radical, an aromatic radical or an alkyl-substituted aromatic radical. Suitable organometalloid radicals include mono-, di- and trisubstituted organometalloid radicals of Group IV-A elements wherein each of the hydrocarbyl groups contain from 1 to about 20 carbon atoms. More particularly, suitable organometalloid radicals include trimethylsilyl, triethylsilyl, ethyldimethylsilyl, methyldiethylsilyl, triphenylgermyl, trimethylgermyl and the like.

Illustrative, but not limiting examples of bis(cyclopentadienyl)zirconium compounds which may be used in the preparation of the improved catalyst of this invention are dihydrocarbyl-substituted bis(cyclopentadienyl)zirconium compounds such as bis(cyclopentadienyl)zirconium dimethyl, bis(cyclopentadienyl)zirconium diethyl, bis(cyclopentadienyl)zirconium dipropyl, bis(cyclopentadienyl)zirconium dibutyl, bis(cyclopentadienyl)zirconium diphenyl, bis(cyclopentadienyl)zirconium dineopentyl, bis(cyclopentadienyl)zirconium di(m-tolyl), bis(cyclopentadienyl)zirconium di(p-tolyl) and the like; (monohydrocarbyl-substituted cyclopentadienyl)zirconium compounds such as (methylcyclopentadienyl) (cyclopentadienyl) and bis(methylcyclopentadienyl)zirconium dimethyl, (ethylcyclopentadienyl)(cyclopentadienyl) and bis(ethylcyclopentadienyl)zirconium dimethyl, (propylcyclopentadienyl)(cyclopentadienyl) and bis(propylcyclopentadienyl)zirconium dimethyl, [(n-butyl)cyclopentadienyl](cyclopentadienyl) and bis[(n-butyl)cyclopentadienyl]zirconium dimethyl, [(t-butyl)cyclopentadienyl](cyclopentadienyl) and bis[(t-butyl)cyclopentadienyl]zirconium dimethyl, (cyclohexylmethylcyclopentadienyl)(cyclopentadienyl) and bis(cyclohexylmethylcyclopentadienyl)zirconium dimethyl, (benzylcyclopentadienyl)(cyclopentadienyl) and bis(benzylcyclopentadienyl)zirconium dimethyl, (diphenylmethylcyclopentadienyl)(cyclopentadienyl) and bis(diphenylmethylcyclopentadienyl)zirconium dimethyl (methylcyclopentadienyl)(cyclopentadienyl) and bis(methylcyclopentadienyl)zirconium dihydride, (ethylcyclopentadienyl)(cyclopentadienyl) and bis(ethylcyclopentadienyl)zirconium dihydride, (propylcyclopentadienyl)(cyclopentadienyl) and bis(propylcyclopentadienyl)zirconium dihydride, [(n-butyl)cyclopentadienyl](cyclopentadienyl) and bis[(n-butyl)cyclopentadienyl]zirconium dihydride, [(t-butyl)cyclopentadienyl](cyclopentadienyl) and bis[(t-butyl)cyclopentadienyl]zirconium dihydride, (cyclohexylmethylcyclopentadienyl)(cyclopentadienyl) and bis(cyclohexylmethylcyclopentadienyl)zirconium dihydride, (benzylcyclopentadienyl)(cyclopentadienyl) and bis(benzylcyclopentadienyl)zirconium dihydride, (diphenylmethylcyclopentadienyl)(cyclopentadienyl) and bis(diphenylmethylcyclopentadienyl)zirconium dihydride and the like; (polyhydrocarbyl-substituted cyclopentadienyl)zirconium compounds such as (dimethylcyclopentadienyl)(cyclopentadienyl) and bis(dimethylcyclopentadienyl)zirconium dimethyl, (trimethylcyclopentadienyl)(cyclopentadienyl) and bis(trimethylcyclopentadienyl)zirconium dimethyl, (tetramethylcyclopentadienyl)(cyclopentadienyl) and bis(tetramethylcyclopentadienyl)zirconium dimethyl, (permethylcyclopentadienyl)(cyclopentadienyl) and bis(permethylcyclopentadienyl)zirconium dimethyl, (ethyltetramethylcyclopentadienyl)(cyclopentadienyl) and bis(ethyltetramethylcyclopentadienyl)zirconium dimethyl, (indenyl)(cyclopentadienyl) and bis(indenyl)zirconium dimethyl, (dimethylcyclopentadienyl)(cyclopentadienyl) and bis(dimethylcyclopentadienyl)zirconium dihydride, (trimethylcyclopentadienyl)(cyclopentadienyl) and bis(trimethylcyclopentadienyl)zirconium dihydride, (tetramethylcyclopentadienyl)(cyclopentadienyl) and bis(tetramethylcyclopentadienyl)zirconium dihydride, (permethylcyclopentadienyl)(cyclopentadienyl) and bis(permethylcyclopentadienyl)zirconium dihydride, (ethyltetramethylcyclopentadienyl)(cyclopentadienyl) and bis(ethyltetramethylcyclopentadienyl)zirconium dihydride, (idenyl)(cyclopentadienyl) and bis(indenyl)zirconium dihydride and the like; (metal hydrocarbyl-substituted cyclopentadienyl)zirconium compounds such as (trimethylsilylcyclopentadienyl)(cyclopentadienyl) and bis(trimethylsilylcyclopentadienyl)zirconium dimethyl, (trimethylgermylcyclopentadienyl)(cyclopentadienyl) and bis(trimethylgermycyclopentadienyl)zirconium dimethyl, (trimethylstannylcyclopentadienyl)(cyclopentadienyl) and bis(trimethyl stannylcyclopentadienyl)zirconium dimethyl, (trimethylplumbyl cyclopentadienyl)(cyclopentadienyl) and bis(trimethylplumbylcyclopentadienyl)zirconium dimethyl, (trimethylsilylcyclopentadienyl)(cyclopentadienyl) and bis(trimethylsilylcyclopentadienyl)zirconium dihydride, (trimethylgermylcyclopentadienyl)(cyclopentadienyl) and bis(trimethylgermylcyclopentadienyl)(zirconium dihydride, (trimethylstannylcyclopentadienyl)(cyclopentadienyl) and bis(trimethylstannylcyclopentadienyl)zirconium dihydride, (trimethylplumbycyclopentadienyl)(cyclopentadienyl) and bis(trimethylplumbylcyclopentadienyl)zirconium dihydride and the like; (halogen-substituted cyclopentadienyl)zirconium compounds such as (trifluoromethylcyclopentadienyl)(cyclopentadienyl) and bis(trifluoromethyl cyclopentadienyl)zirconium dimethyl, (trifluoromethylcyclopentadienyl)(cyclopentadienyl) and bis(trifluoromethylcyclopentadienyl)zirconium dihydride and the like; silyl-substituted (cyclopentadienyl)zirconium compounds such as bis(cyclopentadienyl)zirconium di(trimethylsilyl), bis(cyclopentadienyl)zirconium di(phenyldimethylsilyl) and the like; (bridged-cyclopentadienyl)zirconium compounds such as methylene bis(cyclopentadienyl)zirconium dimethyl, ethylene bis(cyclopentadienyl)zirconium dimethyl, dimethylsilyl bis(cyclopentadienyl)zirconium dimethyl, methylene bis(cyclopentadienyl)zirconium dihydride and dimethylsilyl bis(cyclopentadienyl)zirconium dihydride and the like; bis(cyclopentadienyl)zirconacycles such as bis(pentamethylcyclopentadienyl)zirconacyclobutane, bis(pentamethylcyclopentadienyl)zirconacyclopentane, bis(cyclopentadienyl)zirconaindane and the like; olefin, diolefin and aryne ligand substituted bis(cyclopentadienyl)zirconium compounds such as bis(cyclopentadienyl)(1,3-butadiene)zirconium, bis(cyclopentadienyl)(2,3-dimethyl-1,3-butadiene)zirconium, bis(pentamethylcyclopentadienyl)(benzyne)zirconium and the like; (hydrocarbyl)(hydride)substituted bis(cyclopentadienyl)zirconium compounds such as bis(pentamethylcyclopentadienyl)zirconium (phenyl)(hydride), bis(pentamethylcyclopentadienyl)zirconium (methyl)(hydride) and the like; and bis(cyclopentadienyl)zirconium compounds in which a substituent on the cyclopentadienyl radical is bound to the metal such as (pentamethylcyclopentadienyl)(tetramethylcyclopentadienylmethylene)zirconium hydride, (pentamethylcyclopentadienyl)(tetramethylcyclopentadienylmethylene)zirconium phenyl and the like.

A similar list of illustrative bis(cyclopentadienyl)hafnium and bis(cyclopentadienyl)titanium compounds could be made, but since the lists would be nearly identical to that already presented with respect to bis(cyclopentadienyl)zirconium compounds, such lists are not deemed essential to a complete disclosure. Those skilled in the art, however, are aware that bis(cyclopentadienyl)hafnium compounds and bis(cyclopentadienyl)titanium compounds corresponding to certain of the bis(cyclopentadienyl)zirconium compounds listed supra are not known. The lists would, therefore, be reduced by these compounds. Other bis(cyclopentadienyl)hafnium compounds and other bis(cyclopentadienyl)titanium compounds as well as other bis(cyclopentadienyl)zirconium compounds which are useful in the catalyst compositions of this invention will, of course, be apparent to those skilled in the art.

Compounds useful as a second component in the preparation of the catalyst of this invention will comprise a cation, which is a Bronsted acid capable of donating a proton, and a compatible noncoordinating anion containing a single coordination complex comprising a charge-bearing metal or metalloid core, which anion is relatively large (bulky), capable of stabilizing the active catalyst species (the Group IV-B cation) which is formed when the two compounds are combined and said anion will be sufficiently labile to be displaced by olefinic, diolefinic and actylenically unsaturated substrates or other neutral Lewis bases such as ethers, nitriles and the like. As indicated supra, any metal or metalloid capable of forming a coordination complex which is stable in water may be used or contained in the anion of the second compound. Suitable metals, then, include, but are not limited to, aluminum, gold, platinum and the like. Suitable metalloids include, but are not limited to, boron, phosphorus, silicon and the like. Compounds containing anions which comprise coordination complexes containing a single metal or metalloid atom are, of course, well known and many, particularly such compounds containing a single boron atom in the anion portion, are available commercially. In light of this, salts containing anions comprising a coordination complex containing a single boron atom are preferred.

In general, the second compounds useful in the preparation of the catalysts of this invention may be represented by the following general formula:

$[(L'\text{-}H^{+}]_{d}[(M')^{m+}Q_{1}Q_{2}...Q_{n}]^{d-}$

Wherein:

L' is a neutral Lewis base;

H is a hydrogen atom;

[L'-H] is a Bronsted acid;

M' is a metal or metalloid selected from the Groups subtended by Groups V-B to V-A of the Periodic Table of the Elements; ie., Groups V-B, VI-B, VII-B, VIII, I-B, II-B, III-A, IV-A, and V-A;

$Q_1$ and $Q_n$ are selected, independently, from the Group consisting of hydride radicals, dialkylamido radicals, alkoxide and aryloxide radicals, hydrocarbyl and substituted-hydrocarbyl radicals and organometalloid radicals and any one, but not more than one, of $Q_1$ to $Q_n$ may be a halide radical - the remaining $Q_1$ to $Q_n$ being, independently, selected from the foregoing radicals;

m is an integer from 1 to 7;

n is an integer from 2 to 8; and

n - m = d.

Second compounds comprising boron which are particularly useful in the preparation of catalysts of this invention may be represented by the following general formula:

$[L'\text{-}H]^{+}[BAr_{1}Ar_{2}X_{3}X_{4}]^{-}$

Wherein:

L' is a neutral Lewis base;

H is a hydrogen atom;

$[L'\text{-}H]^{+}$ is a Bronsted acid;

B is boron in a valence state of 3;

$Ar_1$ and $Ar_2$ are the same or different aromatic or substituted-aromatic hydrocarbon radicals containing from about 6 to about 20 carbon atoms and may be linked to each other through a stable bridging group; and

$X_3$ and $X_4$ are radicals selected, independently, from the group consisting of hydride radicals, halide radicals, with the proviso that only $X_3$ or $X_4$ will be halide at the same time, hydrocarbyl radicals containing from 1 to about 20 carbon atoms, substituted- hydrocarbyl radicals, wherein one or more of the hydrogen atoms is replaced by a halogen atom, containing from 1 to about 20 carbon atoms, hydrocarbyl-substituted metal (organometalloid) radicals wherein each hydrocarbyl substitution contains from 1 to about 20 carbon atoms and said metal is selected from Group IV-A of the Periodic Table of the Elements and the like.

In general, $Ar_1$ and $Ar_2$ may, independently, be any aromatic or substituted-aromatic hydrocarbon radical containing from about 6 to about 20 carbon atoms. Suitable aromatic radicals include, but are not limited to, phenyl, naphthyl and anthracenyl radicals. Suitable substituents on useful substituted-aromatic hydrocarbon radicals, include, but are not necessarily limited to, hydrocarbyl radicals, organometalloid radicals, alkoxy radicals, alkylamido radicals, fluoro and fluorohydrocarbyl radicals and the like such as those useful as $X_3$ or $X_4$. The substituent may be ortho, meta or para, relative to the carbon atom bonded to the boron atom. When either or both $X_3$ and $X_4$ are a hydrocarbyl radical, each may be the same or a different aromatic or substituted-aromatic radical as are $Ar_1$ and $Ar_2$, or the same may be a straight or branched alkyl, alkenyl or alkynyl radical having from 1 to about 20 carbon atoms, a cyclic hydrocarbon radical having from about 5 to about 8 carbon atoms or an alkyl-substituted cyclic hydrocarbon radical having from about 6 to about 20 carbon atoms. $X_3$ and $X_4$ may also, independently, be alkoxy or dialkylamido radicals wherein the alkyl portion of said alkoxy and dialkylamido radicals contains from 1 to about 20 carbon atoms, hydrocarbyl radicals and organometalloid radicals having from 1 to about 20 carbon atoms and the like. As indicated supra, $Ar_1$ and $Ar_2$ may be linked to each other. Similarly, either or both of $Ar_1$ and $Ar_2$ could be linked to either $X_3$ or $X_4$. Finally, $X_3$ and $X_4$ may also be linked to each other through a suitable bridging group.

Illustrative, but not limiting, examples of boron compounds which may be used as a second component in the preparation of the improved catalysts of this invention are trialkyl-substituted ammonium salts such as triethylammonium tetra(phenyl)boron, tripropylammonium tetra(phenyl)boron, tri(n-butyl)ammonium tetra(phenyl)boron, trimethylammonium tetra(p-tolyl)boron, trimethylammonium tetra(o-tolyl)boron, tributylammonium tetra(pentafluorophenyl)boron, tripropylammonium tetra(o,p-dimethylphenyl)boron, tributylammonium tetra(m,m-dimethylphenyl)boron, tributylammonium tetra(p-trifluoromethylphenyl)boron, tributylammonium tetra(pentafluorophenyl)boron, tri(n-butyl)ammonium tetra(o-tolyl)boron and the like; N,N-dialkyl anilinium salts such as N,N-dimethylanilinium tetra(phenyl)boron, N,N-diethylanilinium tetra(phenyl)boron, N,N-2,4,6-pentamethylanilinium tetra(phenyl)boron and the like; dialkyl ammonium salts such as di-(i-propyl)ammonium tetra(pentafluorophenyl)boron, dicyclohexylammonium tetra(phenyl)boron and the like; and triaryl phosphonium salts such as triphenylphosphonium tetra(phenyl)boron, tri(methylphenyl)phosphonium tetra(phenyl)boron, tri(dimethylphenyl)phosphonium tetra(phenyl)boron and the like.

Similar lists of suitable compounds containing other metals and metalloids which are useful as second components could be made, but such lists are not deemed necessary to a complete disclosure. In this regard, it should be noted that the foregoing list is not intended to be exhaustive and other boron compounds that would be useful as well as useful compounds containing other metals or metalloids would be readily apparent, from the foregoing general equations, to those skilled in the art.

In general, and while most first components identified above may be combined with most second components identified above to produce an active olefin polymerization catalyst, it is important to continued polymerization operations that either the metal cation initially formed from the first component or a decomposition product thereof be a relatively stable catalyst. It is also important that the anion of the second compound be stable to hydrolysis when an ammonium salt is used. Further, it is important that the acidity of the second component be sufficient, relative to the first, to facilitate the needed proton transfer. Conversely, the basicity of the metal complex must also be sufficient to facilitate the needed proton transfer. Certain metallocene compounds - using bis(pentamethylcyclopentadienyl)hafnium dimethyl as an illustrative, but not limiting example - are resistant to reaction with all but the strongest Bronsted acids and thus are not suitable as first components to form the catalysts of this invention. In general, bis(cyclopentadienyl)metal compounds which can be hydrolyzed by aqueous solutions can be considered suitable as first components to form the catalysts described herein.

With respect to the combination of first (metalcontaining) component to second component to form a catalyst of this invention, it should be noted that the two compounds combined for preparation of the active catalyst must be selected so as to avoid transfer of a fragment of the anion, particularly an aryl group, to the metal cation, thereby forming a catalytically inactive species. This could be done by steric hindrance, resulting from substitutions on the cyclopentadienyl carbon atoms as well as substitutions on the aromatic carbon atoms of the anion. It follows, then, that metal compounds (first components) comprising perhydrocarbyl-substituted cyclopentadienyl radicals could be effectively used with a broader range of second compounds than could metal compounds (first components) comprising unsubstituted cyclopentadienyl radicals. As the amount and size of the substitutions on the cyclopentadienyl radicals are reduced, however, more effective catalysts are obtained with second compounds containing anions which are more resistant to degradation, such as those with substituents on the ortho positions of the phenyl rings. Another means of rendering the anion more resistant to degradation is afforded by fluorine substitution, especially perfluoro-substitution, in the anion. Fluoro-substituted stabilizing anions may, then, be used with a broader range of metal compounds (first components).

In general, the catalyst can be prepared by combining the two components in a suitable solvent at a temperature within the range from about -100°C to about 300°C. The catalyst may be used to polymerize $\alpha$-olefins and/or acetylenically unsaturated monomers having from 2 to about 18 carbon atoms and/or diolefins having from 4 to about 18 carbon atoms either alone or in combination. The catalyst may also be used to polymerize $\alpha$-olefins, diolefins and/or acetylenically unsaturated monomers in combination with other unsaturated monomers. In general, the polymerization may be accomplished at conditions well known in the prior art. It will, of course, be appreciated that the catalyst system will form in situ if the components thereof are added directly to the polymerization process and a suitable solvent or diluent, including condensed monomer, is used in said polymerization process. It is, however, preferred to form the catalyst in a separate step in a suitable solvent prior to adding the same to the polymerization step. While the catalysts do not contain pyrophoric species, the catalysts' components are sensitive to both moisture and oxygen and should be handled and transferred in an inert atmosphere such as nitrogen, argon or helium.

As indicated supra, the improved catalyst of the present invention will, preferably, be prepared in a suitable solvent or diluent. Suitable solvents or diluents include any of the solvents known in the prior art to be useful as solvents in the polymerization of olefins, diolefins and acetylenically unsaturated monomers. Suitable solvents, then, include, but are not necessarily limited to, straight and branched-chain hydrocarbons such as isobutane, butane, pentane, hexane, heptane, octane and the like; cyclic and alicyclic hydrocarbons such as cyclohexane, cycloheptane, methylcyclohexane, methylcycloheptane and the like and aromatic and alkyl-substituted aromatic compounds such as benzene, toluene, xylene and the like. Suitable solvents also include liquid olefins which may act as monomers or comonomers including ethylene, propylene, butadiene, cyclopentene, 1-hexane, 3-methyl-1-pentene, 4-methyl-1-pentene, 1,4-hexadiene, 1-octene, 1-decene and the like. Suitable solvents further include basic solvents not generally useful as polymerization solvents when conventional Ziegler-Natta type polymerization catalysts are used such as chlorobenzene.

While the inventors do not wish to be bound by any particular theory, it is believed that when the two compounds used to prepare the improved catalysts of the present invention are combined in a suitable solvent or diluent, all or a part of the cation of the second compound (the acidic proton) combined with one of the substituents on the metal containing (first component). In the case where the first component has a formula

corresponding to that of general formula 1 supra, a neutral compound is liberated, which neutral compound either remains in solution or is liberated as a gas. In this regard, it should be noted that if either $X_1$ or $X_2$ in the metal containing (first component) is a hydride, hydrogen gas may be liberated. Similarly, if either $X_1$ or $X_2$ is a methyl radical, methane may be liberated as a gas. In the cases where the first component has a formula corresponding to those of general formulae 2, 3 or 4, one of the substituents on the metal-containing (first) component is protonated but, in general, no substituent is liberated from the metal. It is preferred that the molar ratio of first component to second component be 1:1 or greater. The conjugate base of the cation of the second compound, if one remains, will be a neutral compound which will remain in solution or complex with the metal cation formed, though, in general, a second compound is chosen such that any binding of the neutral conjugate base to the metal cation will be weak or non-existant. Thus, as the steric bulk of this conjugate base increases, it will, simply, remain in solution without interfering with the active catalyst. Similarly, if the cation of the second compound is a trialkyl ammonium ion, this ion will liberate a hydrogen atom to form gaseous hydrogen, methane or the like and the conjugate base of the cation will be a tertiary amine. In like fashion, if the cation were a hydrocarbyl- substituted phosphonium ion containing at least one reactive proton, as is essential to the present invention, the conjugate base of the cation would be a phosphine.

While still not wishing to be bound by any particular theory, it is also believed that as one of the metal containing (first component) substituents (a ligand) is liberated, the noncoordinating anion originally contained in the second compound used in the catalyst preparation combines with and stabilizes either the metal cation formed from the first component, formally having a coordination number of 3 and a +4 valence, or a decomposition product thereof. The metal cation and noncoordinating anion will remain so combined until the catalyst is contacted with one or more olefins, diolefins and/or acetylenically unsaturated monomers either alone or in combination with one or more other monomers or another neutral Lewis base. As indicated supra, the anion contained in the second compound must be sufficiently labile to permit rapid displacement by an olefin, diolefin or an acetylenically unsaturated monomer to facilitate polymerization.

The chemical reactions which occur in forming the catalysts of this invention may, when a preferred, boron containing compound is used as the second component, be represented by reference to the general formulae set forth herein as follows: 1. $(A\text{-}Cp)MX_1X_2 + [L'\text{-}H]^+[Bar_1Ar_2X_3X_4]^- \rightarrow$

$[(A\text{-}Cp)MX_1]^+[BAr_1Ar_2X_3X_4]^- + HX_2 + L'$ or

$[(A\text{-}Cp)MX_2]^+[BAr_1Ar_2X_3X_4]^- + HX_1 + L'$

2. $(A\text{-}Cp)MX'_1X'_2 + [L'\text{-}H]^+[BAr_1Ar_2X_3X_4]^- \text{-->}$

$[(A\text{-}Cp)M(X'_1X'_2H)]^+[BAr_1Ar_2X_3X_4]^- + L'$ or

$[(A\text{-}Cp)M(X'_2X'_1H)]^+[BAr_1Ar_2X_3X_4]^- + L'$

3. $(A\text{-}Cp)ML + [L'\text{-}H]^+[BAr_1Ar_2X_3X_4]^- \rightarrow$

$[(A\text{-}Cp)M(LH)]^+[BAr_1Ar_2X_3X_4]^- + L'$

4. $(Cp)(R\text{-}Cp^*)MX_1 + [L'\text{-}H]^+[BAr_1Ar_2X_3X_4]^- \text{-->}$

$[Cp(HR\text{-}Cp^*)MX_1]^+[BAr_1Ar_2X_3X_4]^- + L'$ or

$[Cp(R\text{-}Cp^*)M]^+[BAr_1Ar_2X_3X_4]^- + HX_1 + L'$

In the foregoing reaction equations, the numbers correspond to the numbers set forth in combination with the general equations for useful metallocene compounds of Group IV-B metals (first components). In general the stabillity and rate of formation of the products in the foregoing reaction equations, particularly the metal cation, will vary depending upon the choice of the solvent, the acidity of the $[L'\text{-}H]^+$ selected, the particular L', the anion, the temperature at which the reaction is completed and the particular dicyclopentadienyl derivative of the metal selected. Generally, the initially formed ion-pair will be an active polymerization catalyst and will polymerize α-olefins, diolefins and acetylenically unsaturated monomers either alone or in combination with other monomers. In some cases, however, the initial metal cation will decompose to yield an active polymerization catalyst.

As indicated supra, most first compounds identified above will combine with most second compounds identified above to produce an active catalyst, particularly an active polymerization catalyst. The actual active catalyst species is not, however, always sufficiently stable as to permit its separation and subsequent identification. Moreover, and while many of the initial metal cations formed are relatively stable, it has become apparent that the initially formed metal cation frequently decomposes into one or more other catalytically active species.

While still not wishing to be bound by any particular theory, it is believed that the active catalyst species which have not been characterized, including active decomposition products, are of the same type as those which have been isolated and fully characterized or at least retain the essential ionic structure required for functioning as a catalyst. More particularly, it is believed that the active catalyst species which have not been isolated, including active decomposition products, are the same type as the isolated and characterized active catalyst species in that the these species contain a bis(cyclopentadienyl)metal center which center remains cationic, unsaturated and has a metal- carbon bond which is reactive with olefins, diolefins and acetylenically unsaturated compounds. Furthermore, it is believed that the decomposition products may react with hydrogen gas to enter into a common state of equilibrium involving the cationic hydride complex, $[Cp'CpMH]^+X^-$.

This behavior is best exemplified in a peralkylcyclopentadienyl system wherein a tetraphenyl borate is used as the second component. For example, the reaction of $Cp^*{}_2ZrMe_2$ (where $Cp^* = C_5Me_5$) and $[Bu_3NH]^+[B(Ph'_4)]^-$ (where Ph' = phenyl or para-alkylphenyl with hydrogen or an alkyl group in the

para-position) in toluene gives $[Cp^*{}_2ZrMe]^+[B(Ph')_4]^-$ which is unstable and decomposes by loss of methane to give a single catalytically active product. The deep red product has been fully characterized by NMR spectroscopy and single crystal x-ray diffraction. The general structure of this zwitterionic catalyst of this type is shown below:

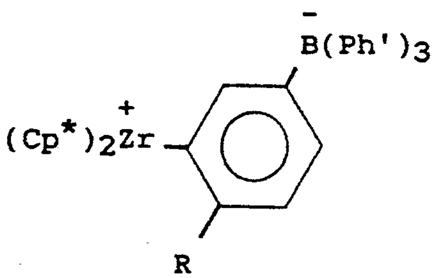

Wherein:
Cp* is a peralkyl-substituted cyclopentadienyl radical wherein each of said alkyl substitutions may be the same or a different $C_1$-$C_{20}$ alkyl radical, preferably the same or a different $C_1$-$C_6$ alkyl radical, most preferably the same or a different $C_1$-$C_4$ alkyl radical;
B is boron;
Zr is zirconium;
Ph′ is a phenyl or alkyl-substituted phenyl radical and each of the 3 Ph's may be the same or different and the alkyl substitutions may be $C_1$-$C_{14}$, preferably $C_1$-$C_6$, most preferably $C_1$-$C_4$; and
R is hydrogen or an alkyl group having from 1 to about 14 carbon atoms, preferably from 1 to about 6 carbon atoms, most preferably from 1 to about 4 carbon atoms.
Addition of excess hydrogen gas to a toluene solution containing the above-identified permethyl-substituted cyclopentadienyl zwitterionic catalyst causes a rapid reaction as evidenced by a color change from red to yellow, and, in concentrated solutions, the formation of a yellow precipitate. Removal of hydrogen from the system regenerates the original zwitterionic catalyst in high yield. While not wishing to be bound by any theory, it is believed that the reaction of hydrogen with the zwitterionic catalyst leads to the formation of $[Cp^*{}_2ZrH]^+[B(Ph')_4]^-$. The reversible nature of this reaction along with other spectroscopic evidence suggests that the hydride cation is in chemical equilibrium with the zwitterionic species.

Consistent with the foregoing, stable polymerization catalysts have been prepared when bis(permethylcyclopentadienyl)zirconium dimethyl has been reacted with tri(n-butyl)ammonium tetra(phenyl)boron, tri(n-butyl)ammonium tetra(p-tolyl)boron and tri(n-butyl)ammonium tetra(p-ethylphenyl)boron. A stable polymerization catalyst has also been prepared when bis(ethyltetramethylcyclopentadienyl)zirconium dimethyl was reacted with tri(n-butyl)ammonium tetra(p-tolyl)boron. In each of these cases, the stable polymerization catalyst was prepared by adding the reactants into a suitable aromatic solvent at a temperature within the range from about 0° C to about 100° C. Based on this and other information available to the inventor, it appears clear that stable zwitterionic polymerization catalysts can also be prepared using bis(perhydrocarbylcyclopentadienyl)zirconium dialkyls and dihydrides in combination with ammonium salts of an unsubstituted or p-substituted-tetra(aryl)boron anion.

In general, the stable catalyst formed by the method of this invention may be separated from the solvent and stored for subsequent use. The less stable catalyst, however, will, generally, be retained in solution until ultimately used in the polymerization of olefins, diolefins and/or acetylenically unsaturated monomers. Alternatively, any of the catalysts prepared by the method of this invention may be retained in solution for subsequent use or used directly after preparation as a polymerization catalyst. Moreover, and as indicated supra, the catalyst may be prepared in situ during a polymerization reaction by passing the separate components into the polymerization vessel where the components will contact and react to produce the improved catalyst of this invention.

When the ratio of first compound to second compound is 1:1, at concentrations below about $10^{-5}$M, the catalyst is often not active for olefin polymerization. While the inventors do not wish to be bound by any particular theory, it is believed that adventitious oxygen or moisture in the diluent or monomers may deactivate the catalyst. When the ratio of the first compound to the second compound is 2:1 to 10:1 or more, however, concentrations of the second compound can be as low as about $10^{-6}$M.

When first compounds containing hafnium are reacted with second compounds containing a metal or a metalloid such as boron and a less acidic ammonium cations - using tri(n-butyl)ammonium tetrakis(pentafluorophenyl)boron as an example - and the catalyst therefrom is used in the polymerization process of this invention, induction periods of about 1 to about 15 minutes or more can be observed before the uptake of monomer begins. This phenomenon is most pronounced when the concentration of the hafnium compound is below about $10^{-4}$M and that of the second component is below about $10^{-5}$M; higher concentrations of catalyst solution often show no induction period. It can also be observed when first compounds containing zirconium are used when the concentration of the second component is about $10^{-6}$ M or less. While the inventors do not wish to be bound by any particular theory, it is believed that the catalyst species formed

decomposes in the polymerization process to form a catalytically inactive metal-containing compound and regenerating either the same or different second component. This new second component activates any excess first component present to regenerate the active catalyst species of the present invention. While still not wishing to be bound by any particular theory, it is believed that increasing the concentration of the catalyst or using second components containing more acidic ammonium cations will either diminish the length of this induction period or eliminate it completely.

In general, and as indicated supra, the improved catalyst of this invention will polymerize olefins, diolefins and/or acetylenically unsaturated monomers either alone or in combination with other olefins and/or other unsaturated monomers at conditions well known in the prior art for conventional Ziegler-Natta catalysis. In the polymerization process of this invention, the molecular weight appears to be a function of both catalyst concentration and polymerization temperature and polymerization pressure. The polymers produced with the catalyst of this invention, when prepared in the absence of significant mass transport effects, will, generally, have relatively narrow molecular weight distributions.

Certain of the catalysts of this invention, particularly those based on hafnocenes - using the catalyst produced from the reaction of bis(cyclopentadienyl)hafnium dimethyl and the trisubstituted ammonium salt of tetra(pentafluorophenyl)boron as an example - when used as described herein for the polymerization and copolymerization of α-olefins, diolefins, and/or acetylenically unsaturated monomers, in the absence of a chain transfer agent, can lead to the production of extremely high molecular weight polymers and copolymers having relatively narrow molecular weight distributions. In this regard, it should be noted that homopolymers and copolymers having molecular weights up to about $2 \times 10^6$ and molecular weight distributions within the range of about 1.5 to about 15 can be produced with the catalysts of this invention. The substituents on the cyclopentadienyl radicals, however, can exert a profound influence on polymer molecular weights.

Catalysts of this invention containing a first component which is either a pure enantiomer or the racemic mixture of two enantiomers of a rigid, chiral metallocene can polymerize prochiral olegins (propylene and higher α-olefins) to isotactic polymers. Bis(cyclopentadienyl)metal compounds in which each of the cyclopentadienyl radicals is substituted and containing a covalent bridging group between the two cyclopentadienyl radicals are particularly useful for isotactic polymerizations of this type.

A particularly surprising feature of some of the catalysts of this invention, particularly those based on hafnocenes in combination with a second component comprising boron, is that when the catalysts of this invention are used to copolymerize α-olefins, either alone or in combination with diolefins, the amount of higher molecular weight olefin or diolefin incorporated into the copolymer is significantly increased when compared to copolymers prepared with the more conventional Ziegler-Natta type catalysts and bis(cyclopentadienyl)zirconium catalysts. The relative rates of reaction of ethylene and higher α-olefins with the aforementioned hafnium-based catalysts of this invention are much closer than with conventional Ziegler-Natta catalysts of the Group IV-B metals. The monomer distibution in copolymers prepared with the catalysts of this invention, particularly with the lower α-olefins and lower diolefins, will range from near perfectly alternating to statistically random.

In general, catalysts can be selected so as to produce the polymer products which will be free of certain trace metals generally found in polymers produced with Ziegler-Natta type catalysts such as aluminum, magnesium, chloride and the like. The polymer products produced with the catalyst of this invention should, then, have a broader range of applications than polymers produced with more conventional Ziegler-Natta type catalysts comprising a metal alkyl, such as an aluminum alkyl.

Also unlike polymers heretofore produced with conventional Ziegler-Natta type polymerization catalysts, the polymers produced with zwitterionic catalysts in the absence of hydrogen or other chain terminating reagents, contain predominantly internal rather than terminal unsaturation. In this regard, it should be noted that if the terminal carbon atom in the polymer chain were numbered one, the unsaturation contained in the polymers produced in the process of this invention would be 2,3 rather than the more traditional 1,2.

PREFERRED EMBODIMENT OF THE INVENTION

In a preferred embodiment of the present invention, a bis(cyclopentadienyl)metal compound, said metal being selected from the Group consisting of titanium, zirconium and hafnium, said compound containing two, independently, substituted or unsubstituted cyclopentadienyl radicals and one or two lower alkyl substituents and/or one or two hydride substituents will be combined with a trisubstituted ammonium salt of either a substituted or unsubstituted tetra(aromatic)boron. Each of the trisubstitutions in the ammonium cation will be the same or a different lower alkyl or aryl radical. By lower alkyl is meant an alkyl radical containing from one to four carbon atoms. When the bis(cyclopentadienyl)metal compound used is a bis(perhydrocarbyl-substituted cyclopentadienyl)metal compound, an unsubstituted or partially substituted tetra(aromatic)boron salt may be used. Tri(n-butyl)ammonium tetra(phenyl)boron, tri(n-butyl)ammonium tetra(p-tolyl)boron and tri(n-butyl)ammonium tetra(p-ethylphenyl)boron are particularly preferred. As the number of hydrocarbyl-substitutions on the cyclopentadienyl radicals is reduced, however, substituted anions will be used in the trisubstituted ammonium salts, particularly, pentafluorosubstituted anions. Tri(n-butyl) ammonium tetra(fluorophenyl)boron is particularly preferred.

In a most preferred embodiment of the present invention, bis(cyclopentadienyl)zirconium dimethyl or bis(cyclopentadienyl)hafnium dimethyl will be reacted with N,N-dimethylanilinium tetra(pentafluorophenyl)boron to produce the most preferred catalyst of the present invention. The two components will be

combined at a temperature within the range from about 0°C to about 100°C. The components will be combined, preferably, in an aromatic hydrocarbon solvent, most preferably toluene. Nominal holding times within the range from about 10 seconds to about 60 minutes will be sufficient to produce both the preferred and most preferred catalyst of this invention.

In a preferred embodiment, the catalyst, immediately after formation, will then be used to polymerize a lower α-olefin particularly ethylene or propylene, most preferably ethylene, at a temperature within the range from about 0°C to about 100°C and at a pressure within the range from about 15 to about 500 psig. In a most preferred embodiment of the present invention, the most preferred catalyst will be used either to homopolymerize ethylene or to copolymerize ethylene with a lower α-olefin having from 3 to 6 carbon atoms, thereby yielding a plastic or an elastomeric copolymer. In both the preferred and most preferred embodiments, the monomers will be maintained at polymerization conditions for a nominal holding time within the range from about 1 to about 60 minutes and the catalyst will be used at a concentration within the range from about $10^{-5}$ to about $10^{-1}$ moles per liter of solvent.

Having thus broadly described the present invention and a preferred and most preferred embodiment thereof, it is believed that the same will become even more apparent by reference to the following examples. It will be appreciated however, that the examples are presented solely for purposes of illustration and should not be construed as limiting the invention. All of the examples were completed either under an argon blanket by standard Schlenk techniques or under a helium blanket in a Vacuum Atmospheres HE43-2 drybox. The solvents used in the experiments were rigorously dried under nitrogen by standard techniques. The boron and metallocene reagents used in the examples were either purchased or prepared following published techniques. The zwitterionic complexes (Examples 1, 4, 10 and 22) were characterized by solid state $^{13}C$ NMR spectroscopy and solution $^{1}H$ NMR spectroscopy. The tetra(p-ethylphenyl)boron zwitterionic derivative isolated in Example 10 was further characterized by single crystal x-ray crystallography.

EXAMPLE 1

In this example, a stable, isolable polymerization catalyst was prepared by combining 0.65 g of tri(n-butyl)ammonium tetra(phenyl)boron with 0.50 g of bis(pentamethylcyclopentadienyl)zirconium dimethyl. The combination was accomplished by first suspending the tri(n-butyl)ammonium tetra(phenyl)boron in 50 ml of toluene and then adding the bis(pentamethylcyclopentadienyl)zirconium dimethyl. The combination was accomplished at room temperature and contacting between the two compounds was continued for 1 hour. After 1 hour, an insoluble orange precipitate separated from solution leaving a clear mother liquor. The orange precipitate was isolated by filteration, washed three times with 20 ml of pentane and dried in-vacuo. 0.75 g of the orange precipitate was recovered. A portion of this product was analyzed and it was found to contain a single organometallic compound having the following general formula:

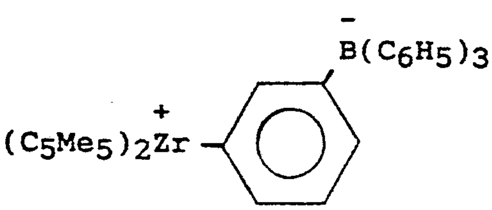

wherein Me is a methyl radical.

EXAMPLE 2

In this example, ethylene was polymerized by adding 0.05 g of the orange precipitate recovered in Example 1 to 20 ml of toluene at room temperature in a 100 ml side armed flask and then adding excess ethylene at atmospheric pressure while maintaining vigorous agitation. An immediate exotherm was detected and the formation of polyethylene observed as the addition of ethylene continued.

EXAMPLE 3

In this example, ethylene was polymerized by first suspending 0.05 g of the orange precipitate prepared in Example 1 to 20 ml of chlorobenzene in a 100 ml side armed flask and then adding excess ethylene at atmospheric pressure while maintaining agitation. An immediate exotherm was detected and the formation of polyethylene was observed as the addition of ethylene continued.

EXAMPLE 4

In this example, an active, isolable olefin polymerization catalyst was prepared by first suspending 0.75 g of tri(n-butyl)ammonium tetra(p-tolyl)boron in 50 ml of toluene and then adding 0.52 g of bis(pentamethylcyclopentadienyl)zirconium dimethyl. The mixture was stirred at room temperature for 1 hour. After 1 hour, an insoluble orange precipitate separated from solution. The orange precipitate was isolated by filtration, washed three times with 20 ml of pentane and dried in-vacuo. 0.55 g of the orange precipitate were recovered. The orange precipitate was analyzed and found to contain an organometallic compound having the following

structure:

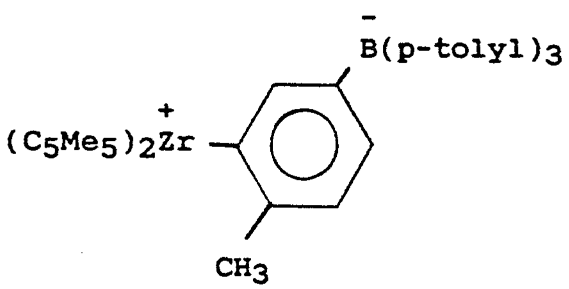

wherein Me is a methyl radical.

EXAMPLE 5

In this example, ethylene was polymerized at atmospheric pressure by passing ethylene into a 20 ml sample of crude reaction mixture from Example 4 in a 100 ml side armed flask. The ethylene was rapidly polymerized.

EXAMPLE 6

In this example, ethylene was polymerized at 40 psig by dissolving 0.02 g of the orange precipitate produced in Example 4 in 100 ml of toluene in a Fisher-Porter glass pressure vessel, heating the solution to 80°C and then passing ethylene into said solution at 40 psig for 20 minutes. 2.2 g of polyethylene were obtained and the average molecular weight of the polymer was 57,000. The polymer had a polydispersity of 2.5.

EXAMPLE 7

In this example, ethylene and acetylene were copolymerized by dissolving 0.05 g of the orange precipitate from Example 4 in toluene and then adding 2 ml of purified acetylene at atmospheric pressure in an NMR tube. An immediate color change from orange to yellow was noted. After five minutes, 5 ml of ethylene at atmospheric pressure were added to this mixture and an immediate exotherm was observed as was polymer formation.

EXAMPLE 8

In this example, an active isolable olefin polymerization catalyst was produced by first suspensing 0.56 g of tri(n-butyl)ammonium tetra(o-tolyl)boron in 50 ml of toluene and then adding 0.25 g of bis(cyclopentadienyl)zirconium dimethyl. The mixture was stirred at room temperature for 1 hour. After 1 hour an insoluble yellow precipitate separated from an orange solution. The yellow precipitate was isolated by filtration, washed three times with 20 ml of pentane and dried in-vacuo. 0.26 g of the yellow precipitate were recovered.

EXAMPLE 9

In this example, excess ethylene was added at atmospheric pressure to a portion of the orange mother liquor from Example 8 in a 100 ml side armed flask and polyethylene formed. Ethylene was also contacted with a portion of the yellow precipitate, which precipitate was suspended in toluene in a 50 ml side armed flask and again polyethylene was formed.

EXAMPLE 10

In this example, an active, isolable olegin polymerization catalyst was produced by first suspending 1.20 g of tri(n-butyl)ammonium tetra(p-ethylphenyl)boron in 50 ml of toluene and then adding 0.76 g of bis(pentamethylcyclopentadienyl)zirconium dimethyl. The mixture was stirred at room temperature for 1 hour. After 1 hour, the reaction mixture was evaporated to dryness. The crude orange solid, which was produced, was recrystallized from hot toluene to give 1.0 g of orange-red crystals. A portion of this product was analyzed and confirmed to be an organometallic compound having the following structure:

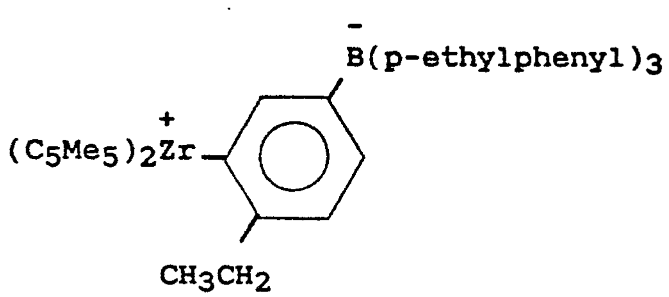

wherein Me is a methyl radical.

EXAMPLE 11

In this example, ethylene was polymerized by dissolving 0.10 g of the orange-red crystals from Example 10 in toluene and then placing the solution in a steel autoclave under nitrogen pressure. Ethylene at 100 psig was then introduced into the autoclave and the autoclave heated to 80°C with agitation. After 10 minutes, the reactor was vented to atmospheric pressure and opened. The yield of linear polyethylene was 27 g having a weight average molecular weight of about 52,000.

EXAMPLE 12

In this example, an active, isolable olefin polymerization catalyst was prepared by first suspending 0.78 g in tri(n-butyl)ammonium tetra(m,m-dimethylphenyl)boron in 50 ml of toluene and then adding 0.50 g of bis(pentamethylcyclopentadienyl)zirconium dimethyl. The mixture was stirred at room temperature for 1 hour. After 1 hour, the reaction mixture was evaporated to dryness. The resulting crude red-brown solid was washed with 30 ml of pentane and dried in-vacuo to yield 0.56 g of a toluene soluble brown solid. Both the brown solid and the crude reaction mixture were dissolved in 40 ml of toluene in a 100 ml side armed flask and were observed to polymerize ethylene at atmospheric pressure.

EXAMPLE 13

In this example, two active, isolable olefin polymerization catalysts were prepared by first dissolving 0.78 g of tri(n-butyl)ammonium tetra(o,p-dimethylphenyl)boron in 30 ml of toluene and 15 ml of pentane. The solution was then cooled to -30°C and 0.50 g of bis(pentamethylcyclopentadienyl)zirconium dimethyl were added. The mixture was warmed to room temperature with agitation and held for 4 hours. A yellow precipitate was separated from a purple reaction mixture by filtration. The yellow precipitate was dried in-vacuo to give 0.62 g of product. After separation of the yellow precipitate, the purple mother liquor was evaporated to dryness to give 0.32 g of a purple glassy solid. The yellow and purple products polymerized ethylene in deutero-toluene in NMR tubes.

EXAMPLE 14

In this example, an olefin polymerization catalyst was prepared by combining 0.06 g of bis(1,3-bistrimethylsilylcyclopentadienyl)zirconium dimethyl, 0.05 g of N,N-dimethylanilinium tetra(phenyl)boron and 1 ml of deutero-benzene in an NMR tube and allowing the components to react. The NMR spectrum showed complete loss of starting materials after 20 minutes at room temperature. The reaction mixture was then divided into two portions, diluted with 20 ml toluene, and placed in 50 ml side armed flasks. Ethylene was added to one portion and propylene to the other. Rapid polymerization was observed in both cases.

EXAMPLE 15

In this example, an active olefin polymerization catalyst was prepared by first suspending 0.87 g of tri(n-butyl)ammonium tetra(p-tolyl)boron in 50 ml of toluene and then adding 0.50 g of (pentamethylcyclopentadienyl)(cyclopentadienyl)zirconium dimethyl. The reaction was stirred at room temperature for 18 hours to give a blue-green homogenous solution. The reaction mixture was dried in-vacuo, washed with 30 ml of pentane, and then redissolved in 100 ml of toluene. The resulting blue-green solution was filtered into a glass pressure vessel and stirred under 1.5 atmospheres of ethylene. An immediate exotherm and polymer formation was observed upon exposure of ethylene. The yield of polyethylene was 4.5 g after 15 minutes.

EXAMPLE 16

In this example, an olefin polymerization catalyst was prepared by first suspending 0.1 g of tri(n-butyl)ammonium tetra(p-ethylphenyl)boron in 5 ml of $d_6$-benzene and then adding 0.05 g of (pentamethylcyclopentadienyl)(cyclopentadienyl)zirconium dimethyl. The reaction was complete after 30 minutes. The green solution was then dried in-vacuo to give a green glassy solid. The crude green product was extracted with 20 ml of toluene. In separate experiments, the toluene extract was exposed to ethylene, to propylene and to a mixture of ethylene and propylene. In each case significant polymerization activity was observed.

EXAMPLE 17

In this example, an acrive olefin polymerization catalyst was prepared by first suspending 0.22 g of tri(n-butyl)ammonium tetra(pentafluorophenyl)boron in 50 ml of toluene and then adding 0.10 g of bis(pentamethylcyclopentadienyl)zirconium dimethyl. The reaction vessel was capped with a rubber septum and stirred at room temperature. After 10 minutes the reaction mixture (now yellow and homogeneous) was pressurized with 1.5 atmospheres of ethylene and stirred vigorously. Rapid polymerization of ethylene was observed causing a significant increase in the reaction temperature (from room temperature to at least 80°C) during the first 5 minutes of polymerization. After 15 minutes, the reaction vessel was vented and methanol was added to kill the still active catalyst. The yield of linear polyethylene was 3.7 g.

EXAMPLE 18

In this example, an active olefin polymerization catalyst was prepared by suspending 0.34 g of tri(n-butyl)ammonium tetra(pentafluorophenyl)boron in 50 ml of toluene and then adding 0.13 g of (pentamethylcyclopentadienyl) (cyclopentadienyl)zirconium dimethyl. The reaction vessel was capped with a rubber septum and stirred at room temperature. After 10 minutes the reaction mixture (a yellow solution above an insoluble orange oil) was pressurized with 1.5 atmospheres of ethylene and stirred vigorously. Rapid polymerization of ethylene was observed causing a significant increase in the reaction temperature (from room temperature to at least 80° C) during the first minute of polymerization. After 10 minutes, the reaction vessel was vented and methanol was added to kill the still active catalyst. The yield of linear polyethylene was 3.7 g.

EXAMPLE 19

In this example, an active olefin polymerization catalyst was prepared by combining 0.18 g of tri(n-butyl)ammonium tetra(pentafluorophenyl)boron in 50 ml of toluene and then adding 0.12 g of bis[1,3-bis(trimethylsilyl)cyclopentadienyl]zirconium dimethyl. The reaction vessel was capped with a rubber septum and stirred at room temperature. After 10 minutes the reaction mixture (a yellow solution above an insoluble yellow oil) was pressurized with 1.5 atmospheres of ethylene and stirred vigorously. Rapid polymerization of ethylene was observed causing a significant increase in the reaction temperature (from room temperature to at least 80° C) during the first minutes of polymerization. After 10 minutes the reaction vessel was vented and methanol was added to kill the still active catalyst. The yield of linear polyethylene was 2.1 g.

EXAMPLE 20

In this example, an active olefin polymerization catalyst was prepared by suspending 0.34 g of tri(n-butyl)ammonium tetra(pentafluorophenyl)boron in 50 ml of toluene and then adding 0.10 g of bis(cyclopentadienyl)zirconium dimethyl. The reaction vessel was capped with a rubber septum and stirred at room temperature. After 10 minutes the reaction mixture (a yellow solution above an insoluble orange oil) was pressurized with 1.5 atmospheres of ethylene and stirred vigorously. Rapid polymerization of ethylene was observed causing a significant increase in the reaction temperature (from room temperature to at least 80° C) during the first minutes of polymerization. After 10 minutes the reaction vessel was vented and methanol was added to deactivate the still active catalyst. The yield of linear polyethylene was 3.7 g.

EXAMPLE 21

In this example, an active olefin polymerization catalyst was prepared by combining 0.12 g of tri(n-butyl)ammonium tetra(pentafluorophenyl)boron and 0.04 g of bis(cyclopentadienyl)zirconium dimethyl in 100 ml of toluene in a 250 ml flask. The flask was capped with a rubber septum and stirred at 60° C for 3 minutes. Ethylene at 1.5 atmospheres and 3 ml of 1-hexane were then added to the flask. After 20 minutes, the flask was vented and methanol was added to deactivate the still active catalyst. The white polymeric product was collected by filteration and dried in-vacuo to yield 8.0 g of a hexene-ethylene copolymer. The melting point of the copolymer was 125° C.

EXAMPLE 22

In this example, an active, isolable olefin polymerization catalyst was prepared by first suspending 1.30 g of tri(n-butyl)ammonium tetra(p-tolyl)boron in 50 ml of toluene and then adding 1.00 g of bis(ethyltetramethylcyclopentadienyl)zirconium dimethyl. The mixture was stirred at room temperature for 1 hour. After 1 hour, an insoluble orange precipitate separated from solution. The orange precipitate was isolated by filteration, washed three times with 20 ml of pentane and dried in-vacuo. 0.55 g of the orange precipitate were recovered. The orange precipitate was analyzed and found to contain an organometallic compound having the following structure:

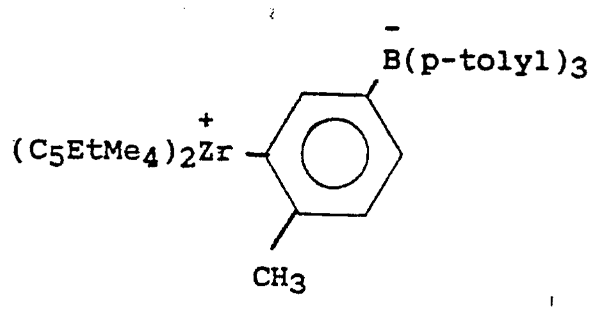

wherein Et is an ethyl radical and Me is a methyl radical.

EXAMPLE 23

In this example, 0.05 g of the orange precipitate produced in Example 22 was dissolved in 2 ml of deutero-toluene and placed in a 5 mm NMR tube and capped with a rubber septum. Ethylene (2 ml at 1 atm) was added via syringe and immediately polymerized.

EXAMPLE 24

In this example, ethylene and 1-butene were copolymerized in a hexane diluent by adding under a nitrogen atmosphere to a 1 L stainless-steel autoclave, previously flushed with nitrogen and containing 400 ml of dry oxygen-free hexane, 40 ml of a toluene solution containing 4 mg of bis(cyclopentadienyl)zirconium dimethyl and 12 mg of tri(n-butyl)ammonium tetrakis(pentafluorophenyl)boron. 1-butene (200 ml) was added to the autoclave, which was further pressurized with 65 psig of ethylene. The autoclave was stirred and heated for 7 minutes at 60°. The reactor was vented and cooled and the contents dried. The yield of copolymer isolated was 9.2 g. The weight-average molecular weight of the polymer was 108,000 and the molecular weight distribution was 1.97. A compositional distribution analysis indicated a breadth index of 88%.

EXAMPLE 25

In this example, ethylene and 1-butene was copolymerized in a hexane diluent by adding under a nitrogen atmosphere to a 1 L stainless-steel autoclave, previously flushed with nitrogen and containing 400 ml of dry, oxygen-free hexane, 40 ml of a toluene solution containing 4 mg of bis(cyclopentadienyl)zirconium dimethyl and 12 mg of tri(n-butyl)ammonium tetrakis(pentafluorophenyl)boron. 1-butene (200 ml) was added to the autoclave, which was further pressurized with 65 psig of ethylene. The autoclave was stirred and heated at 50°C for 10 minutes. The autoclave was vented and cooled and the contents dried. The yield of copolymer isolated was 7.1 g. The weight-average molecular weight of the polymer was 92,000 with a molecular weight distribution of 1.88. Analysis by $^{13}C$ NMR spectroscopy indicated a reactivity ratio ($r_1r_2$) of 0.145.

EXAMPLE 26

In this example, ethylene and 1-butene were copolymerized in a hexane diluent by adding under a nitrogen atmosphere to a 1 L stainless-steel autoclave, previously flushed with nitrogen and containing 400 ml of dry, oxygen-free hexane, 25 ml of a toluene solution containing 9 mg of bis[(t-butyl)cyclopentadienyl]zirconium dimethyl and 2.9 mg of N,N-dimethylanilinium tetrakis(pentafluorophenyl)boron. 1-butene (100 ml) was added to the autoclave, which was further pressurized with 65 psig of ethylene. The autoclave was stirred and heated at 50° for 1 hour. The autoclave was vented and cooled and the contents dried. The yield of copolymer isolated was 27.2 g. The weight-average molecular weight of the polymer was 23,000 with a molecular weight distribution of 1.8. Analysis of the composition distribution indicated a median comonomer content of 6.3 mole% and a breadth index of 81%.

EXAMPLE 27

In this example, a stirred 100 ml steel autoclave reaction vessel which was equipped to perform Ziegler-Natta polymerization reactions at pressures up to 2500 bar and temperatures up to 300° was used. The temperature of the cleaned reactor containing ethylene at low pressure was equilibrated at the desired reaction temperature of 160°. The catalyst solution was prepared by dissolving 259 mg of a zwitterionic catalyst (prepared from bis(ethyltetramethylcyclopentadienyl)zirconium dimethyl and tri(n-butyl)ammonium tetra(p-ethylphenyl)boron in 10.0 ml of distilled toluene under nitrogen. A 0.4 ml portion of this catalyst solution was transferred by low-pressure nitrogen into a constant-volume injection tube, which was held at 25°. Ethylene was pressured into the autoclave at a total pressure of 1500 bar. The reactor contents were stirred at 1000 rpm for 1 minute at which time the catalyst solution was rapidly injected into the stirring reactor with excess pressure. The temperature and pressure changes were recorded continuously for 120 seconds at which time the contents were rapidly vented, yielding the polymer. The reactor was washed with xylene to collect any polymer remaining inside and all polymer was dried in-vacuo. The yield of polyethylene isolated was 0.56 g. This polymer had a weight-average molecular weight of 21,900, a molecular weight distribution of 10.6 and a density of 0.965 g/ml.

EXAMPLE 28

In this example, ethylene was polymerized by adding under a nitrogen atmosphere to a 1 L stainless-steel autoclave, previously purged with nitrogen and containing 400 ml of dry, oxygen-free hexane, first a solution of 15 mg of bis(cyclopentadienyl)hafnium dimethyl in 30 ml of toluene, then, after 5 minutes, a toluene solution (50 ml) containing 12 mg of bis(cyclopentadienyl)hafnium dimethyl and 30 mg of tri(n-butyl)ammonium tetrakis(perfluorophenyl)boron. The autoclave was pressured with 90 psig of ethylene and stirred at 60°. After 1 hour, the autoclave was vented and opened. The yield of linear polyethylene isolated was 73.8 g. This material had a weight-average molecular weight of 1,100,000 and a molecular weight distribution of 1.78.

EXAMPLE 29

In this example, ethylene and propylene were copolymerized in a hexane diluent by adding under a nitrogen atmosphere to a 1 L stainless-steel autoclave previously flushed with nitrogen and containing 400 ml of dry, oxygen-free hexane, first a solution of 15 mg bis(cyclopentadienyl)hafnium dimethyl in 25 ml of toluene, stirring for 5 minutes, then 50 ml of a toluene solution containing 17 mg bis(cyclopentadienyl)hafnium dimethyl and 42 mg of tri(n-butyl)ammonium tetrakis(pentafluorophenyl)boron. Propylene (200 ml) was added to the autoclave, which was further pressured with an additional 50 psig of ethylene. The autoclave was stirred at 60° for 15 minutes. The reactor was vented and opened and the residual hexane in the contents evaporated under a

stream of air. The yield of copolymer isolated was 61.0 g. This copolymer, which was 35.1 wt% ethylene, had a weight-average molecular weight of 103,000 and a molecular weight distribution of 2.3. Analysis by $^{13}C$ NMR spectroscopy indicated a statistically random copolymer.

EXAMPLE 30

In this example, ethylene and propylene were copolymerized in bulk propylene by adding under a nitrogen atmosphere to a 1 L stainless-steel autoclave preeviously flushed with nitrogen 50 ml of a toluene solution containing 36 mg of bis(cyclopentadienyl)hafnium dimethyl and 11 mg of N,N-dimethylanilinium tetrakis(pentafluorophenyl)boron. Propylene (400 ml) was added to the autoclave, which was further pressurized with 120 psig of ethylene. After stirring for 15 minutes at 50°, the reactor was vented and opened and the contents dried under a stream of air. The yield of copolymer isolated was 52.6 g. The copolymer, which was 38.1 wt% ethylene, had a weight-average molecular weight of 603,000 and a molecular weight distribution of 1.93.

EXAMPLE 31

In this example, ethylene and 1-butene were copolymerized in a hexane diluent by adding under a nitrogen atmosphere to a 1 L stainless-steel autoclave, previously flushed with nitrogen and containing 400 ml of dry, oxygen-free hexane, first a 30 ml of a toluene solution containing 15 mg of bis(cyclopentadienyl hafnium dimethyl, then after stirring for 5 minutes, 30 ml of a toluene solution containing 12 mg of bis(cyclopentadienyl)hafnium dimethyl and 30 mg of tri(n-butyl)ammonium tetrakis(pentafluorophenyl)boron. 1-butene (50 ml) was added to the autoclave, which was further pressurized with 65 psig of ethylene. The autoclave was stirred and heated to 50° for 1 hour. The reactor was vented and opened and the contents dried in a vacuum oven. The yield of copolymer isolated was 78.7 g. This copolymer, which was 62.6 wt% ethylene, had a weight-average molecular weight of 105,000 and a molecular weight distribution of 4.94. Analysis by $^{13}C$ NMR spectroscopy indicated a reactivity ratio ($r_1r_2$) of 0.153.

EXAMPLE 32

In this example, ethylene, propylene, and 1-butene were copolymerized in a hexane diluent by adding under a nitrogen atmosphere to a 1 L stainless-steel reactor, previously flushed with nitrogen and containing 400 ml of dry, oxygen-free hexane, 50 ml of a toluene solution containing 19 mg of bis(cyclopentadienyl)hafnium dimethyl and 15 mg of tri(n-butyl)ammonium tetrakis(pentafluorophenyl)boron. 1-butene (50 ml) and propylene (25 ml) were added to the autoclave, which was further pressurized with 60 psig of ethylene. The autoclave was stirred at 50° for 45 minutes, then cooled and vented. The contents were dried under a stream of air. The yield of isolated terpolymer was 17.9 g. The weight-average molecular weight of the polymer was 188,000 and the molecular weight distribution was 1.89. Analysis by $^{13}C$ NMR spectroscopy indicated that the polymer contained 62.9 mole% ethylene, 25.8 mole% propylene, and 11.3 mole% butene.

EXAMPLE 33

In this example, ethylene, propylene, and 1,4-hexadiene were copolymerized in a hexane diluent by adding under a nitrogen atmosphere to a 1 L stainless-steel autoclave, previously flushed with nitrogen and containing 400 ml of dry, oxygen-free hexane, first 100 ml of freshly-distilled 1,4-hexadiene, then 50 ml of a catalyst solution containing 72 mg of bis(cyclopentadienyl)hafnium dimethyl and 16 mg N,N-dimethylanilinium tetrakis(perfluorophenyl)boron. Propylene (50 ml) was added to the autoclave, which was further pressurized with 90 psig of ethylene. The autoclave was stirred at 50° for 10 minutes, then cooled and vented. The contents were dried under a stream of air. The yield of isolated terpolymer was 30.7 g. The weight-average molecular weight of the polymer was 191,000 and the molecular weight distribution was 1.61. Analysis by $^{13}C$ NMR spectroscopy indicated that the polymer contained 70.5 mole% ethylene, 24.8 mole% propylene, and 4.7 mole% 1,4-hexadiene.

EXAMPLE 34

In this example, ethylene and 1-hexene were copolymerized in a hexane diluent by adding under a nitrogen atmosphere to a 1 L stainless-steel autoclave, previously flushed with nitrogen and containing 400 ml of dry, oxygen-free hexane, first 30 ml of toluene solution containing 15 mg of bis(cyclopentadienyl)hafnium dimethyl, then, after 5 minutes, 100 ml of alumina-filtered and degassed 1-hexene and then 50 ml of a toluene solution containing 12 mg of bis(cyclopentadienyl)hafnium dimethyl and 30 mg of tri(n-butyl)ammonium tetrakis(pentafluorophenyl)boron. The autoclave was pressurized with 65 psig of ethylene, stirred and heated at 50° for 1 hour, then cooled and vented. The contents were dried in a vacuum oven. The yield of isolated copolymer was 54.7 g. The copolymer, which was 46 wt% ethylene, had a weight-average molecular weight of 138,000 and a molecular weight distribution of 3.08. Analysis by $^{13}C$ NMR spectroscopy indicated a reactivity ratio ($r_1r_2$) of 0.262.

EXAMPLE 35

In this example, propylene was polymerized in a hexane diluent by adding under a nitrogen atmosphere to a 1 L stainless-steel autoclave, previously flushed with nitrogen and containing 200 ml of dry, oxygen-free hexane, 50 ml of a toluene solution containing 72 mg of bis(cyclopentadienyl)hafnium dimethyl and 22 mg of N,N-dimethylanilinium tetrakis(pentafluorophenyl)boron. Propylene (200 ml) was added and the autoclave was

stirred at 40° for 65 minutes. The autoclave was cooled and vented and the contents dried in a vacuum oven. The yield of atactic polypropylene was 37.7 g. The weight-average molecular weight of this polymer was 92,000 and the molecular weight distribution was 1.54.

EXAMPLE 36

In this experiment, propylene was polymerized in bulk propylene by adding under a nitrogen atmosphere to a 1 L stainless-steel autoclave, previously flushed with nitrogen, 50 ml of a toluene solution containing 77 mg of bis(cyclopentadienyl)hafnium dimethyl and 22 mg of N,N-dimethylanilinium tetrakis(pentafluorophenyl)boron. Propylene (400 ml) was added and the autoclave stirred at 40° for 90 minutes. The autoclave was cooled and vented and the contents dried in a vacuum oven. The yield of atactic polypropylene isolated was 58.7 g. The weight-average molecular weight of this polymer was 191,000 and the molecular weight distribution was 1.60.

EXAMPLE 37

In this example, propylene was polymerized in bulk propylene by washing 72 mg of bis(cyclopentadienyl)hafnium dimethyl and 22 mg of N,N-dimethylanilinium tetrakis(pentafluorophenyl)boron into a 1L stainless-steel autoclave, previously flushed with nitrogen, with 500 ml of propylene. The autoclave was stirred at 40° for 90 minutes and at 50° for another 30 minutes, then cooled and vented. 2.3 g of atactic polypropylene were isolated.

EXAMPLE 38

In this example, ethylene was polymerized by reacting 55 mg of bis(trimethylsilylcyclopentadienyl)hafnium dimethyl with 80 mg of N,N-dimethylanilinium tetrakis(pentafluorophenyl boron in 5 ml of toluene in a serum-capped vial. On passing ethylene through the solution for 15 seconds, polymer formed as the mixture grew hot. The vial was opened and the contents diluted with acetone, filtered, washed, and dried. The yield of polyethylene was 0.26 g.

EXAMPLE 39

In this example, propylene was polymerized in bulk propylene by adding under a nitrogen atmosphere to a 1 L stainless-steel autoclave, previously flushed with nitrogen, 25 ml of a toluene solution containing 10 mg of rac-dimethylsilyl bis(indenyl)hafnium dimethyl and 5 mg of N,N-dimethylanilinium tetrakis(pentafluorophenyl)boron. Propylene (500 ml) was added and the autoclave stirred at 40° for 4.5 hours. The autoclave was cooled and vented and the contents dried in a vacuum oven. The yield of isotactic polypropylene isolated was 78.5 g. The weight-average molecular weight of this polymer was 555,000 and the molecular weight distribution was 1.86. The polymer had a melting point of 139°C. Analysis by $^{13}C$ NMR spectroscopy indicated that the polymer was about 95% isotactic.

EXAMPLE 40

In this example, an active ethylene polymerization catalyst was prepared by suspending 40 mg of N,N-dimethyl anilinium tetrakis(pentafluorophenyl)boron and 17 mg of 1-bis(cyclopentadienyl)zircona-3-dimethylsilacyclobutane in 10 ml of toluene in a septum-capped round bottomed flask. Passage of ethylene through the solution for 30 seconds caused the solution to become hot as polymer precipitated. The flask was opened and the contents diluted with acetone. the polymer was filtered off, washed with acetone, and dried in vacuo. The yield of polymer isolated was 0.15 g.

EXAMPLE 41

In this example, an active ethylene polymerization catalyst was prepared by suspending 36 mg of 1-bis(cyclopentadienyl)titana-3-dimethylsilacyclobutane and 80 mg of N,N-dimethylanilinium tetrakis(pentafluorophenyl)boron in 20 ml of toluene in a serum-capped round bottomed flask. The solution darkened when ethylene was passed through it. After 5 minutes, the flask was opened and the contents diluted with ethanol. The polymer was filtered off, washed with ethanol, and dried. The yield of polyethylene isolated was 0.51 g.

EXAMPLE 42

In this example, an active ethylene polymerization catalyst was prepared by suspending 29 mg of (pentamethyl cyclopentadienyl)(tetramethyl-eta$^1$-cyclopentadienyl)zirconium phenyl and 43 mg of tri(n-butyl)ammonium tetrakis(pentafluorophenyl)boron in 25 ml of toluene in a serum-capped round-bottomed flask. On passing ethylene through the solution, polymer formed almost instantly. After 5 minutes, the flask was opened and the contents diluted with ethanol. The polymer was filtered off, washed with acetone, and dried. The yield of polyethylene isolated was 0.49 g.

EXAMPLE 43

In this example, an active ethylene polymerization catalyst was prepared by suspending 34 mg of bis(cyclopentadienyl)zirconium(2,3-dimethyl-1,3-butadiene) and 85 mg of tri(n-butyl)ammonium tetrakis(pentafluorophenyl)boron in 50 ml of toluene in a serum-capped bottle. On introducing ethylene, the solution grew warm instantly as polymer precipitated. After 5 minutes the bottle was opened and the contents diluted with ethanol. The polymer formed was filtered off, washed with ethanol, and dried. The yield of polymer isolated was

1.06 g.

EXAMPLE 44

In this example, ethylene was polymerized by reacting 20 mg of 1-bis(cyclopentadienyl)hafna-3-dimethylsilacyclobutane and 39 mg of N,N-dimethylanilinium tetrakis(pentafluorophenyl)boron in 20 ml of toluene in a serum-capped round-bottomed flask. On passing ethylene through the solution, polymer precipitated as the solution grew warm. After 1 minute, the flask was opened and the contents diluted with ethanol. The polymer was filtered off, washed with ethanol, and dried. The yield of polyethylene isolated was 0.263 g.

EXAMPLE 45

In this example, ethylene was polymerized by reacting 21 mg of bis(cyclopentadienyl)hafnium(2,3-dimethyl-1,3-butadiene) and 41 mg of tri(n-butyl)ammonium tetrakis(pentafluorophenyl)boron in 50 ml of toluene in a serum-capped bottle. On passing ethylene through the solution, polymer precipitated within seconds. After 10 minutes, the bottle was opened and the contents diluted with ethanol. The solid polymer was filtered off, washed with acetone, and dried. The yield of polyethylene isolated was 0.93 g.

EXAMPLE 46

In this example, ethylene was polymerized by reacting 53 mg of (pentamethylcyclopentadienyl)(tetramethylcyclopentadienylmethylene)hafnium benzyl and 75 mg og N,N-dimethylanilinium tetrakis(pentafluorophenyl)boron in 50 ml of toluene in a serum-capped bottle. Ethylene was passed through the solution for 10 minutes. The bottle was opened and the contents diluted with ethanol. The polymer was filtered off, washed with acetone, and dried. The yield of polyethylene isolated was 0.65 g.

While the present invention has been described and illustrated by reference to particular embodiments thereof, it will be appreciated by those of ordinary skill in the art that the same lends itself to variations not necessarily illustrated herein. For this reason, then, reference should be made solely to the appended claims for purposes of determining the true scope of the present invention.

## Claims

1. Method for preparing a catalyst comprising the steps of:

(a) Combining, in a suitable solvent or diluent, at least one first compound consisting of a bis(cyclopentadienyl)metal compound containing at least one substituent capable of reacting with a proton, said metal being selected from the group consisting of titanium, zirconium and hafnium and at least one second compound comprising a cation capable of donating a proton and an anion which is a single coordination complex comprising a plurality of lipophilic radicals covalently coordinated to and shielding a central charge-bearing metal or metalloid atom, which anion is bulky, labile and capable of stabilizing the metal cation formed as a result of the reaction between the two compounds;

(b) Maintaining the contacting in step (a) for a sufficient period of time to permit the proton provided by the cation of said second compound to react with said substituent contained in said bis(cyclopentadienyl)metal compound; and

(c) Recovering an active catalyst as a direct product or as a decomposition product of one or more of said direct products from step (b).

2. Method according to Claim 1 wherein said bis(cyclopentadienyl)metal compound may be represented by the following general formulae:

1. $(A\text{-}Cp)MX_1X_2$
2. $(A\text{-}Cp)M\overbrace{X'_1X'_2}$
3. $(A\text{-}Cp)ML$ and/or
4. $(Cp^*)(Cp\overbrace{R)M}X_1$

Wherein:

M is a metal selected from the group consisting of titanium, zirconium and hafnium; (A-Cp) is either $(Cp)(Cp^*)$ or $Cp\text{-}A'\text{-}Cp^*$ and Cp and $Cp^*$ are the same or different substituted or unsubstituted cyclopentadienyl radicals;

A′ is a covalent bridging group;

L is an olefin, diolefin or aryne ligand;

$X_1$ and $X_2$ are, independently, selected from the group consisting of hydride radicals, hydrocarbyl radicals, substituted-hydrocarbyl radicals, organometalloid radicals and the like;

$X'_1$ and $X'_2$ are joined and bound to the metal atom to form a metallacycle, in which the metal atom, $X'_1$ and $X'_2$ form a hydrocarbocyclic ring containing from about 3 to about 20 carbon atoms; and

R is a substituent on one of the cyclopentadienyl radicals which is also bound to the metal atom.

3. Method according to Claim 1 or Claim 2 wherein said second compound may be represented by the following general formula:

$$[(L'\text{-}H)^+]_d[(M')^{m+}Q_1Q_2...Q_n]^{d-}$$

Wherein:
L′ is a neutral Lewis base;
H is a hydrogen atom;
[L′-H] is a Bronsted acid;
M′ is a metal or metalloid selected from the Groups subtended by Groups V-B to V-A of the Periodic Table of the Elements; ie., groups V-B, VI-B, VII-B, VIII, I-B, II-B, III-A, IV-A and V-A;
$Q_1$ to $Q_n$ are selected, independently, from the group consisting of hydride radicals, dialkylamido radicals, alkoxide and aryloxide radicals, hydrocarbyl and substituted-hydrocarbyl radicals and organometalloid radicals and any one, but not more than one, of $Q_1$ to $Q_n$ may be a halide radical - the remaining $Q_1$ to $Q_n$ being, independently, selected from the foregoing radicals;
m is an integer from 1 to 7;
n is an integer from 2 to 8; and
$n - m = d$.

4. Method according to any of the preceding claims wherein said second compound may be represented by the general formula:
$[L'\text{-}H]^+[BAr_1Ar_2X_3X_4]^-$
Wherein:
L′ is a neutral Lewis base;
H is a hydrogen atom;
$[L'\text{-}H]^+$ is a Bronsted acid;
B is boron in a valence state of 3;
$Ar_1$ and $Ar_2$ are the same or different aromatic or substituted-aromatic hydrocarbon radicals which radicals may be linked to each other through a stable bridging group; and $X_3$ and $X_4$ are, independently, selected from the group consisting of hydride radicals, halide radicals and hydrocarbyl and substituted-hydrocarbyl radicals, organometalloid radicals and the like.

5. Method according to any of the preceding claims wherein the first compound is of the general formula 1 in Claim 2 and wherein said second compound is a trisubstituted ammonium salt of an unsubstituted or substituted aromatic boron compound, with said first compound being optionally a bis(cyclopentadienyl)metal compound containing two independently, substituted or unsubstituted cyclopentadienyl radicals and two lower alkyl substituents or two hydrides, the metal being preferably zirconium or hafnium.

6. Method of Claim 5 wherein said second compound is a tri(n-butyl)ammonium tetra(phenyl)boron, in which case preferably said first compound is a bis(pentamethylcyclopentadienyl)zirconium dimethyl; or said second compound is N,N-dimethylanilinium tetra(phenol)boron, in which case said first compound is preferably a bis[1,3-bis(trimethylsilyl)cyclopentadienyl]zirconium dimethyl.

7. Method according to Claim 5 wherein said second compound is selected from the group consisting of tri(n-butyl)ammonium tetra(p-tolyl)boron, tri(n-butyl)ammonium tetra(o-tolyl)boron, tri(n-butyl)ammonium tetra(m,m-dimethylphenyl)boron and tri(n-butyl)ammonium tetra(o,m-dimethylphenyl)boron, in which case preferably said first compound is a bis(pentamethylcyclopentadienyl)zirconium dimethyl; or wherein said second compound is selected from the group consisting of tri(n-butyl)ammonium tetra(p-tolyl)boron and tri(n-butyl)ammonium tetra (p-ethylphenyl)boron, in which case preferably said first compound is selected from the group consisting of bis(pentamethylcyclopentadienyl)zirconium dimethyl, and (pentamethylcyclopentadienyl)(cyclopentadienyl)zirconium dimethyl; or wherein said second compound is selected from the Group consisting of tri(n-butyl)ammonium tetra(pentafluorophenyl)boron and N,N-dimethylanilinium tetra(pentafluorophenyl)boron.

8. Method according to any of claims 1 to 4 wherein the first compound is of the general formula 2 in Claim 2 and wherein said second compound is a trisubstituted ammonium salt of a tetra(substituted-aromatic)boron compound, preferably N,N-dimethylanilinium tetra(pentafluorophenyl)boron, in which case preferably said first compound is selected from the group consisting of 1-bis(cyclopentadienyl)titana-3-dimethylsilacyclobutane, 1-bis(cyclopentadienyl)zircona-3-dimethylsilacyclobutane and 1-bis(cyclopentadienyl)hafna-3-dimethylsilacyclobutane.

9. Method according to any of claims 1 to 4 wherein the first compound is of the general formula 3 in Claim 2 and wherein said second compound is a trisubstituted ammonium salt of a tetra(substituted-aromatic)boron compound, preferably tri(n-butyl)ammonium tetra(pentafluorophenyl)boron, in which case preferably said first compound is selected from the group consisting of bis(cyclopentadienyl)zirconium(2,3-dimethyl-1,3-butadiene) and bis(cyclopentadienyl)hafnium(2,3-dimethyl-1,3-butadiene).

10. Method according to any of claims 1 to 4 wherein the first compound is of the general formula 4 in Claim 2 and wherein said second compound is a trisubstituted ammonium salt of a tetra(substituted-aromatic)boron compound, said first compound being preferably selected from the group consisting of (pentamethylcyclo pentadienyl)(tetramethylcyclopentadienylmethylene)zirconium phenyl and (pentamethylcyclopentadienyl)(tetramethylcyclopentadienylmethylene)hafnium benzyl in which case said second compound is preferably tri(n-butyl)ammonium tetra(pentafluorophenyl)boron or a N,N-dimethylanilinium tetra(phenyl)boron compound.

11. Method for polymerizing an α-olefin, diolefin and/or an acetylenically unsaturated monomer containing from 2 to about 18 carbon atoms and/or an acetylenically unsaturated compound containing

from 2 to about 18 carbon atoms either alone or in combination with each other or with other monomers comprising the steps of:

(a) contacting an olefin, diolefin and/or an acetylenically unsaturated compound containing from 2 to about 18 carbon atoms either alone or in combination with each other or with other monomers in a suitable carrier, solvent or diluent with a catalyst prepared previously or in situ during polymerization by a method according to any of the preceding claims;

(b) continuing the contacting of step (a) for a sufficient period of time to polymerize at least a portion of the monomer or monomers;

(c) recovering a polymer product.

12. Catalyst prepared by a method according to any of claims 1 to 10.

13. A polymer comprising a monomer selected from the group consisting of α-olefins, diolefins, acetylenically unsaturated monomers and mixtures there prepared with a catalyst according to Claim 12.

14. Composition of matter containing an organometallic compound having the following general structural formula:

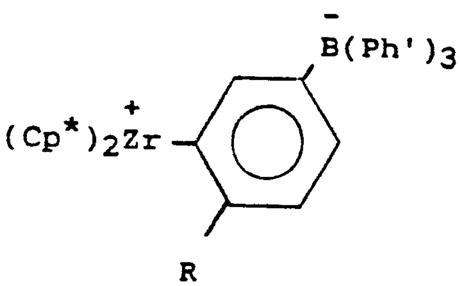

wherein:

Cp* is a peralkyl-substituted cyclopentadienyl radical wherein each of said alkyl substitutions may be the same or a different $C_1$-$C_{20}$ alkyl radical;

B is boron;

Zr is zirconium;

Ph′ is a phenyl or alkyl-substituted phenyl radical and each of the 3 Ph′s may be the same or different and the alkyl substitutions may be $C_1$-$C_{14}$; and

R is hydrogen or an alkyl group having from 1 to about 14 carbon atoms.

15. Composition of matter according to Claim 14 having the following general structural formula:

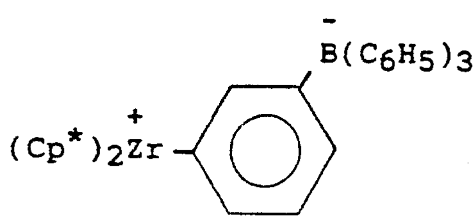

wherein Cp* is a (pentamethylcyclopentadienyl) radical;

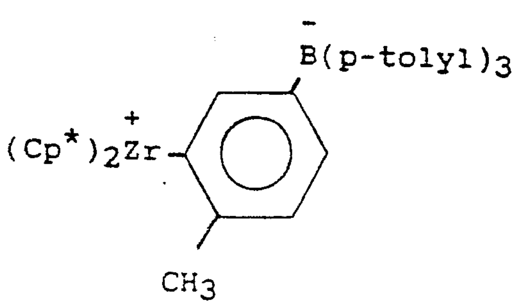

wherein Cp* is a (pentamethylcyclopentadienyl) radical;

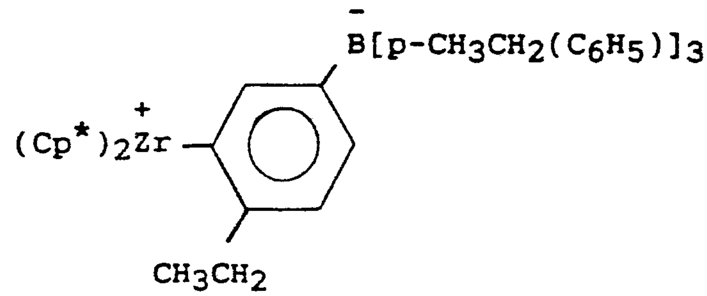

wherein Cp* is a (pentamethylcyclopentadienyl) radical; or

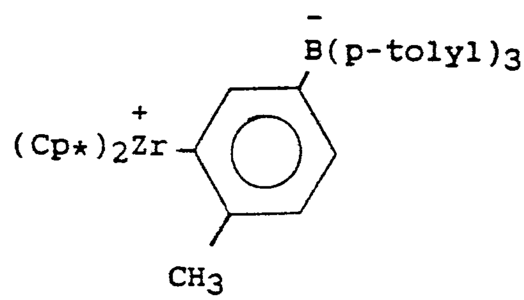

wherein Cp* is a (ethyltetramethylcyclopentadienyl) radical.

16. As a composition of matter, an organometallic compound represented by one of the following general formulae:

1. $\{[(A\text{-}Cp)MX_1]\}_d[(M')^{m+}Q_1Q_2...Q_n]^{d-}$
2. $\{[(A\text{-}Cp)MX_1L']\}_d[(M')^{m+}Q_1Q_2...Q_n]^{d-}$

Wherein:

M is a metal selected from the Group consisting of titanium, zirconium, and hafnium;

(A-Cp) is either (Cp)(Cp*) or Cp-A'-Cp* and Cp and Cp* are the same or different substituted or unsubstituted cyclopentadienyl radicals;

A' is a covalent bridging group;

$X_1$ is selected from the group consisting of hydride radicals, hydrocarbyl radicals; substituted-hydrocarbyl radicals, organometalloid radicals and the like;

L' is a neutral Lewis base;

M' is a metal or metalloid selected from the Groups encompassed by Groups V-B to VI-A of the Periodic Table of the Elements; ie., Groups V-B, VI-B, VII-B, VIII, I-B, II-B, III-A, IV-A, and V-A;

$Q_1$ to $Q_n$ are selected, independently, from the Group consisting of hydride radicals, dialkylamido radicals, alkoxide and aryloxide radicals, hydrocarbyl and substituted-hydrocarbyl radicals, and organometalloid radicals and any one, but not more than one, of the $Q_1$ to $Q_n$ may be a halide radical - the remaining $Q_1$ to $Q_n$ being, independently, selected from the foregoing radicals;

m is an integer from 1 to 7;

n is an integer from 2 to 8; and

$n - m = d$.

17. The composition of matter of Claim 16 wherein said anion may be represented by the following general formula:

$[BAr_1Ar_2X_3X_4]^-$

Wherein:

B is boron in a valence state of 3;

$Ar_1$ and $Ar_2$ are the same or different aromatic or substituted-aromatic hydrocarbon radicals which radicals may be linked to each other through a stable bridging group; and

$X_3$ and $X_4$ are, independently selected from the group consisting of hydride radicals, halide radicals, and hydrocarbyl and substituted-hydrocarbyl radicals, organometalloid radicals, and the like.

18. The composition of matter of Claim 17 wherein said anion is chosen from the group consisting of unsubstituted tetra(aromatic)boron anions and substituted tetra(aromatic)boron anions.

European Patent Office

# EUROPEAN SEARCH REPORT

Application Number

EP 88 30 0699

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| D,A | JOURNAL OF THE CHEMICAL SOCIETY, CHEMICAL COMMUNICATIONS, 1986, pages 1610-1611; M. BOCHMANN et al.: "Synthesis and insertion reactions of cationic alkylbis(cyclopentadienyl)titanium complexes" * Whole abstract * | 1 | C 08 F 4/64<br>C 08 F 4/76<br>C 08 F 10/00<br>C 07 F 17/00 |
| D,A | EP-A-0 200 351 (MITSUI PETROCHEM) * Whole document * | 1 | |
| A | US-A-3 231 593 (W. HAFNER et al.) * Claims; column 5, line 71 - column 6, line 7; examples * | 1 | |
| | | | TECHNICAL FIELDS SEARCHED (Int. Cl.4) |
| | | | C 08 F<br>C 07 F |

The present search report has been drawn up for all claims

| Place of search | Date of completion of the search | Examiner |
|---|---|---|
| THE HAGUE | 14-04-1988 | DE ROECK R.G. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)